(19) Europäisches Patentamt / European Patent Office / Office européen des brevets

(11) **EP 4 144 139 B1**

(12) **EUROPEAN PATENT SPECIFICATION**

(45) Date of publication and mention
of the grant of the patent:
**11.03.2026 Bulletin 2026/11**

(51) International Patent Classification (IPC):
**H04W 48/16** *(2009.01)*    **H04W 74/0833** *(2024.01)*
**H04W 4/70** *(2018.01)*    **H04W 74/0836** *(2024.01)*
**H04W 74/0838** *(2024.01)*

(52) Cooperative Patent Classification (CPC):
**H04W 48/16; H04W 74/0833;** H04W 4/70;
H04W 74/0836; H04W 74/0838

(21) Application number: **21722444.3**

(22) Date of filing: **28.04.2021**

(86) International application number:
**PCT/EP2021/061194**

(87) International publication number:
**WO 2021/219756 (04.11.2021 Gazette 2021/44)**

(54) **FIRST MESSAGE DIFFERENTIATION IN CFRA PROCEDURE**

ERSTE NACHRICHTENDIFFERENZIERUNG IN EINEM CFRA-VERFAHREN

DIFFÉRENCIATION DE PREMIERS MESSAGES DANS UNE PROCÉDURE CFRA

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.04.2020 PCT/CN2020/087790**

(43) Date of publication of application:
**08.03.2023 Bulletin 2023/10**

(73) Proprietor: **Telefonaktiebolaget LM Ericsson (publ)**
**164 83 Stockholm (SE)**

(72) Inventors:
• **LIN, Zhipeng**
**Nanjing, Jiangsu 211100 (CN)**
• **LI, Jingya**
**417 58 Göteborg (SE)**
• **SAHLIN, Henrik**
**435 41 Mölnlycke (SE)**

(74) Representative: **Ericsson**
**Patent Development**
**Torshamnsgatan 21-23**
**164 80 Stockholm (SE)**

(56) References cited:
JP-A- 2019 121 953    US-A1- 2013 242 730
US-A1- 2019 254 071    US-A1- 2019 364 599
US-A1- 2020 037 297    US-A1- 2021 068 161

• "3rd Generation Partnership Project; Technical Specification Group Radio Access Network; NR; Physical layer procedures for control (Release 16)", vol. RAN WG1, no. V16.1.0, 3 April 2020 (2020-04-03), pages 1 - 156, XP051893821, Retrieved from the Internet <URL:ftp://ftp.3gpp.org/Specs/archive/38_series/38.213/38213-g10.zip 38213-g10.docx> [retrieved on 20200403]

**Description**

TECHNICAL FIELD

This disclosure relates to apparatuses, methods, and systems for collision free random access procedures. Some aspects of this disclosure relate to first and second physical random access channel (PRACH) configurations that enable differentiated admission control based on a user equipment (UE) priority, a UE type, a service priority, a service type, and/or a network slice.

BACKGROUND

1.1. New Radio Initial Access

The New Radio (NR) (a.k.a. 5G or Next Generation (NG)) architecture may include one or more of a user equipment (UE) and a network node (e.g., an NG NodeB (gNB)). The network node may be a 5G node. Before the user equipment (UE) can properly communicate within a network, the UE must carry out a cell search to find, synchronize, and identify a cell. After finding, synchronizing, and identifying a cell, the UE can acquire basic system information and perform a random access procedure to establish a connection to the cell.

1.1.1. NR cell search and system information acquisition

In NR, the combination of synchronization signals (SS) and physical broadcast channel (PBCH) is referred to as an SS/PBCH block (SSB). Similar to Long Term Evolution (LTE), a pair of SS, primary synchronization signal (PSS) and secondary synchronization signal (SSS), is periodically transmitted on downlink from each cell to allow a UE to initially access to the network. By detecting SS, a UE can obtain the physical cell identity, achieve downlink synchronization in both time and frequency, and acquire the timing for PBCH. PBCH carries the master information block (MIB), which contains minimum system information that a UE needs to acquire system information block 1 (SIB 1). SIB1 carries the remaining minimum system information that is needed for a UE to be able to perform a subsequent random-access procedure.

1.1.2. NR random access procedure

Two types of random access procedure are supported: (1) 4-step random access (RA) type with Msg1 and (2) 2-step RA type with MSGA. Both types of RA procedure support contention-based random access (CBRA) and contention-free random access (CFRA).

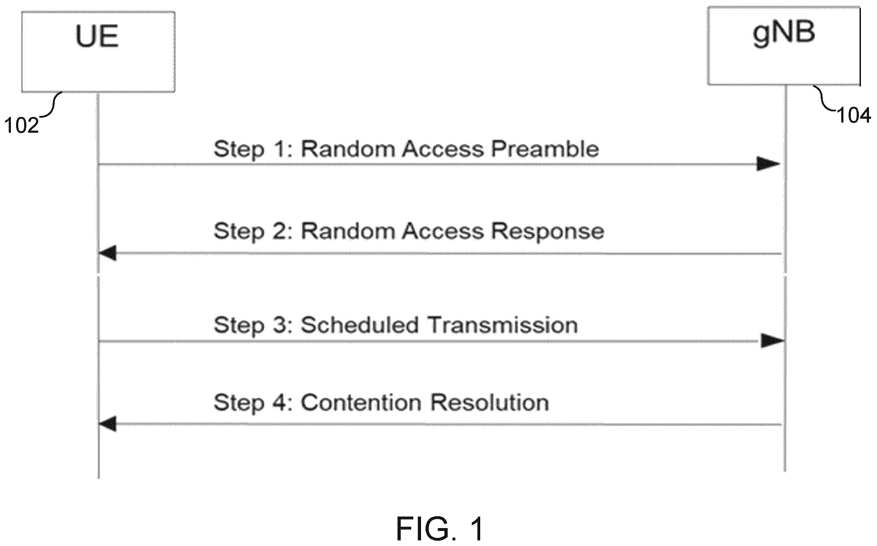

The 4-step random access procedure, also referred to as Type-1 random access procedure in Technical Specification (TS) 38.213, is illustrated in FIG. 1. In the first step, a UE 102 initiates the random-access procedure by transmitting in uplink (UL) a random-access preamble (called Msg 1) on a physical random-access channel (PRACH). After detecting the Msg1, a network node 104 (e.g., gNB) will respond by transmitting in downlink (DL) a random-access response (RAR) on a physical downlink shared channel (PDSCH) (called Msg2). In the third step, after successfully decoding Msg2, the UE 102 continues the procedure by transmitting in UL a physical uplink shared channel (PUSCH) (called Msg3) for terminal identification and Radio Resource Control (RRC) connection establishment request. In the last step of the procedure, the network node 104 transmits in DL a PDSCH (called Msg4) for contention resolution.

There can be cases that multiple UEs select the same random-access preamble and transmit the preamble on the same PRACH time/frequency resource. This preamble collision is called contention. One of the main purposes of Steps 3 and 4 of the 4-step random access procedure is to resolve such potential contention.

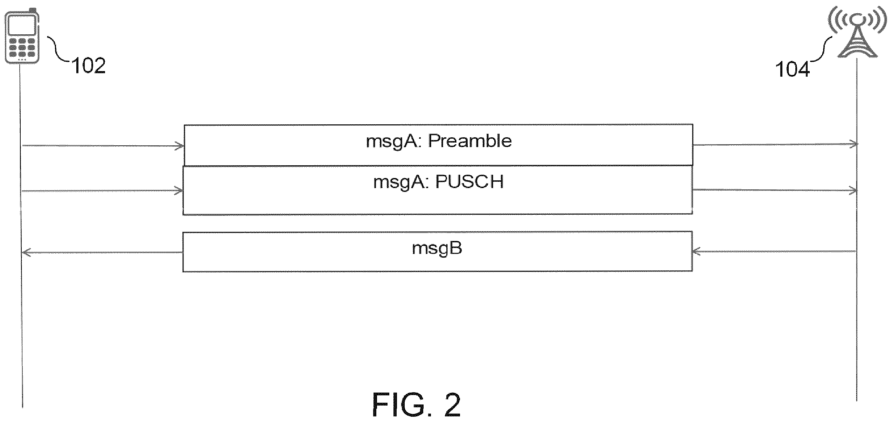

The 2-step random access procedure, also referred to as Type-2 random access procedure in TS 38.213, is illustrated in FIG. 2. In the first step, a UE 102 sends a message A (MsgA) including a random access preamble together with higher layer data such as an RRC connection request and possibly with some small payload on PUSCH. In the second step, after detecting the MsgA, the network node 104 sends a RAR (called message B) including UE identifier assignment, timing advance information, and contention resolution message etc.

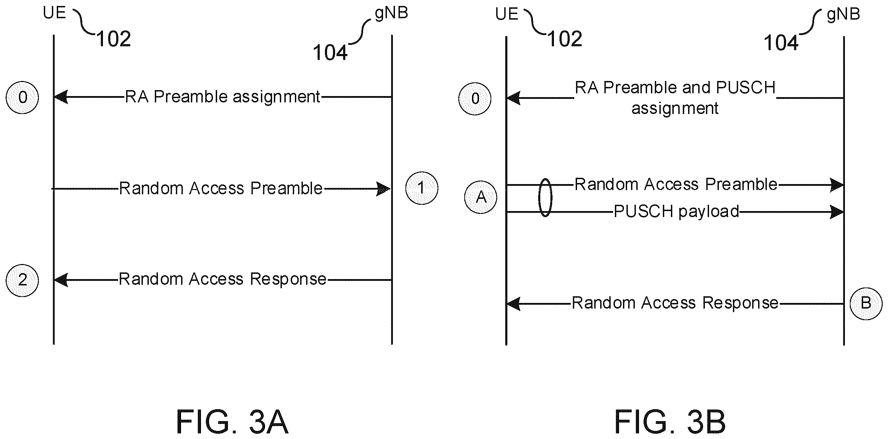

FIG. 3A illustrates a CFRA procedure with 4-step RA type, and FIG. 3B illustrates a CFRA procedure with 2-step RA type. As shown in FIG. 3A, the network node 104 assigns a preamble for CFRA in 4-step RACH, and, as shown in FIG. 3B, the network node 104 assigns a preamble and PUSCH for CFRA in 2-step RACH. The network node 104 does not configure CFRA resources for 4-step and 2-step RA types at the same time for a Bandwidth Part (BWP). CFRA with 2-step RA type is only supported for handover.

The Msg1 of 4-step RA type includes only a preamble on PRACH, while the MSGA of the 2-step RA type includes a preamble on PRACH and a payload on PUSCH. After Msg1 transmission or MSGA transmission, the UE 102 monitors for a response from the network node 104 within a configured window. For CFRA, upon receiving the network response, the UE 102 ends the random access procedure.

1.2. NR Rel-15 PRACH configuration

In NR, the time and frequency resource on which a random-access preamble (Msg 1) is transmitted is defined as a PRACH occasion.

The time resources and preamble format for the Msg1 transmission is configured by a PRACH configuration index, which indicates a row in a PRACH configuration table specified in TS 38.211 Tables 6.3.3.2-2, 6.3.3.2-3, 6.3.3.2-4 for FR1 paired spectrum, FR1 unpaired spectrum, and FR2 with unpaired spectrum, respectively.

Part of the Table 6.3.3.2-3 for FR1 unpaired spectrum for preamble format 0 is copied in Table 1 below, where the value of x indicates the PRACH configuration period in number of system frames. The value of y indicates the system frame within each PRACH configuration period on which the PRACH occasions are configured. For instance, if y is set to 0, then, it means PRACH occasions only configured in the first frame of each PRACH configuration period. The values in the column "subframe number" tells on which subframes are configured with PRACH occasion. The values in the column "starting symbol" is the symbol index

In case of time division duplex (TDD), semi-statically configured DL parts and/or actually transmitted SSBs can override and invalidate some time-domain PRACH occasions defined in the PRACH configuration table. More specifically, PRACH occasions in the UL part are always valid, and a PRACH occasion within the X part is valid as long as (i) it does not precede or collide with an SSB in the RACH slot and (ii) it is at least N symbols after the DL part and the last symbol of an SSB. N is 0 or 2 depending on PRACH format and subcarrier spacing.

Table 1. PRACH configuration for preamble format 0 for FR1 unpaired spectrum

| PRACH Configuration Index $N_t^{\mathrm{RA,slot}}$ | Preambleformat | $n_{SFN}$ mod x $= y$ $N_{\mathrm{dur}}^{\mathrm{RA}}$ | | Subframe number | Starting symbol | Number of PRACH slots within a subframe | , number of time-domain PRACH occasions within a PRACH slot | , PRACH duration |
| | | x | y | | | | | |
|---|---|---|---|---|---|---|---|---|
| 0 | 0 | 16 | 1 | 9 | 0 | - | - | 0 |
| 1 | 0 | 8 | 1 | 9 | 0 | - | - | 0 |
| 2 | 0 | 4 | 1 | 9 | 0 | - | - | 0 |
| 3 | 0 | 2 | 0 | 9 | 0 | - | - | 0 |
| 4 | 0 | 2 | 1 | 9 | 0 | - | - | 0 |
| 5 | 0 | 2 | 0 | 4 | 0 | - | - | 0 |
| 6 | 0 | 2 | 1 | 4 | 0 | - | - | 0 |
| 7 | 0 | 1 | 0 | 9 | 0 | - | - | 0 |
| 8 | 0 | 1 | 0 | 8 | 0 | - | - | 0 |
| 9 | 0 | 1 | 0 | 7 | 0 | - | - | 0 |
| 10 | 0 | 1 | 0 | 6 | 0 | - | - | 0 |
| 11 | 0 | 1 | 0 | 5 | 0 | - | - | 0 |
| 12 | 0 | 1 | 0 | 4 | 0 | - | - | 0 |
| 13 | 0 | 1 | 0 | 3 | 0 | - | - | 0 |
| 14 | 0 | 1 | 0 | 2 | 0 | - | - | 0 |
| 15 | 0 | 1 | 0 | 1,6 | 0 | - | - | 0 |
| 16 | 0 | 1 | 0 | 1,6 | 7 | - | - | 0 |
| 17 | 0 | 1 | 0 | 4,9 | 0 | - | - | 0 |
| 18 | 0 | 1 | 0 | 3,8 | 0 | - | - | 0 |

(continued)

| PRACH Configuration Index $N_t^{\text{RA,slot}}$ | Preambleformat | $n_{SFN} \bmod x = y$ $N_{\text{dur}}^{\text{RA}}$ | | Subframe number | Starting symbol | Number of PRACH slots within a subframe | , number of time-domain PRACH occasions within a PRACH slot | , PRACH duration |
|---|---|---|---|---|---|---|---|---|
| | | x | y | | | | | |
| 19 | 0 | 1 | 0 | 2,7 | 0 | - | - | 0 |
| 20 | 0 | 1 | 0 | 8,9 | 0 | - | - | 0 |
| 21 | 0 | 1 | 0 | 4,8,9 | 0 | - | - | 0 |
| 22 | 0 | 1 | 0 | 3,4,9 | 0 | - | - | 0 |
| 23 | 0 | 1 | 0 | 7,8,9 | 0 | - | - | 0 |
| 24 | 0 | 1 | 0 | 3,4,8,9 | 0 | - | - | 0 |
| 25 | 0 | 1 | 0 | 6,7,8,9 | 0 | - | - | 0 |
| 26 | 0 | 1 | 0 | 1,4,6,9 | 0 | - | - | 0 |
| 27 | 0 | 1 | 0 | 1,3,5,7,9 | 0 | - | - | 0 |

In the frequency domain, NR supports multiple frequency-multiplexed PRACH occasions on the same time-domain PRACH occasion. This is mainly motivated by the support of analog beam sweeping in NR such that the PRACH occasions associated to one SSB are configured at the same time instance but different frequency locations. The starting position in the frequency is indicated by the higher-layer parameter *msg1-FrequencyStart* in SIB1, and the number of consecutive PRACH occasions frequency division multiplexed (FDMed) in one time instance is configured by the higher-layer parameter *msg1-FDM* in SIB1. The number of PRACH occasions FDMed in one time domain PRACH occasion, can be 1, 2, 4, or 8.

Here the *msg1-FDM* and *msg1-FrequencyStart* are defined in 3GPP TS 38.331 as below:

*msg1-FDM :* The number of PRACH transmission occasions FDMed in one time instance.

*msg1-FrequencyStart :* Offset of lowest PRACH transmission occasion in frequency domain with respective to PRB 0. The value is configured so that the corresponding RACH resource is entirely within the bandwidth of the UL BWP.

## *RACH-ConfigGeneric* information element

```
-- ASN1START
-- TAG-RACH-CONFIG-GENERIC-START

RACH-ConfigGeneric ::=          SEQUENCE {
    prach-ConfigurationIndex     INTEGER (0..255),
    msg1-FDM                     ENUMERATED {one, two, four, eight},
    msg1-FrequencyStart          INTEGER (0..maxNrofPhysicalResourceBlocks-1),
    zeroCorrelationZoneConfig    INTEGER(0..15),
    preambleReceivedTargetPower  INTEGER (-202..-60),
    preambleTransMax             ENUMERATED {n3, n4, n5, n6, n7, n8, n10, n20, n50, n100, n200},
    powerRampingStep             ENUMERATED {dB0, dB2, dB4, dB6},
    ra-ResponseWindow            ENUMERATED {sl1, sl2, sl4, sl8, sl10, sl20, sl40, sl80},
    ...
}

-- TAG-RACH-CONFIG-GENERIC-STOP
-- ASN1STOP
```

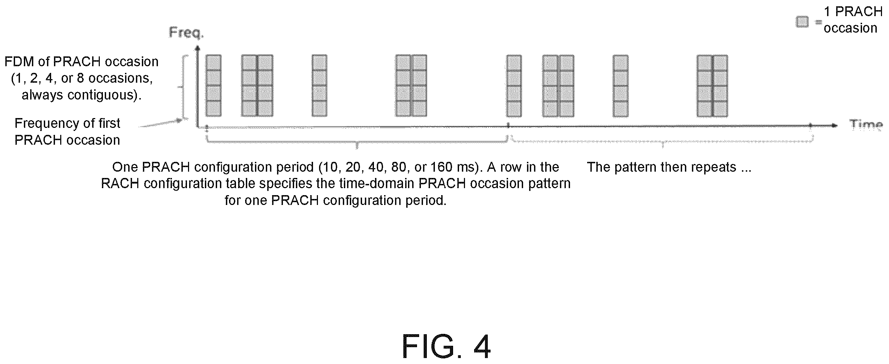

FIG. 4 gives an example of the PRACH occasion configuration in NR.

In NR Rel-15, there are up to 64 sequences that can be used as random-access preambles per PRACH occasion in each cell. The RRC parameter *totalNumberOfRA-Preambles* determines how many of these 64 sequences are used as random-access preambles per PRACH occasion in each cell. The 64 sequences are configured by including firstly all the available cyclic shifts of a root Zadoff-Chu sequence, and secondly in the order of increasing root index, until 64 preambles have been generated for the PRACH occasion.

1.2.1. NR Rel-15 association between SSB and PRACH occasion

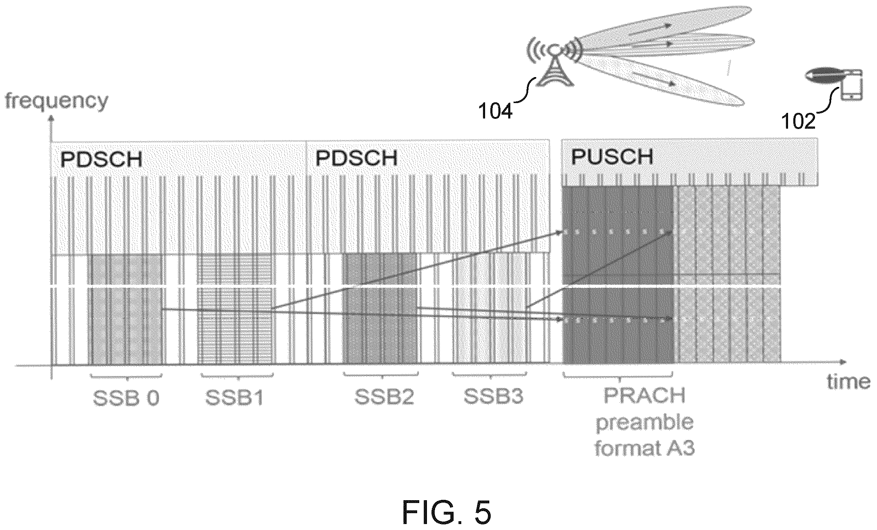

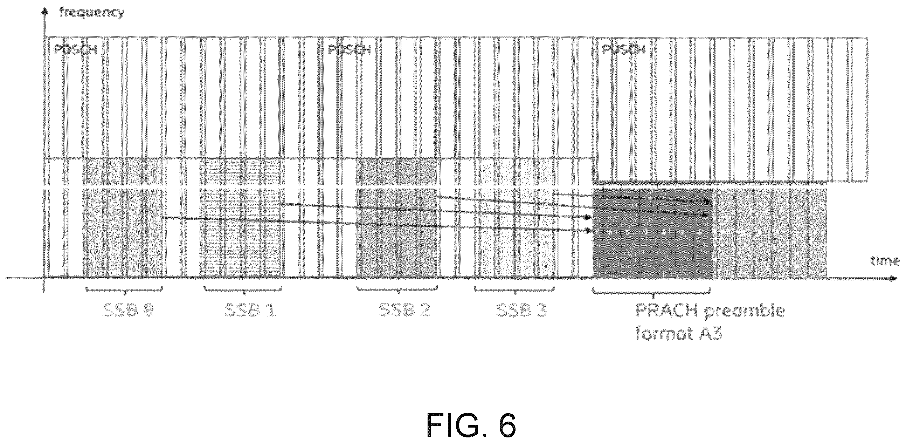

NR Rel-15 supports one-to-one, one-to-many, and many-to-one association between SSB and PRACH occasions, as illustrated in FIGS. 5 and 6.

The preambles associated to each SSB are configured by the two RRC parameters in the *RACH-ConfigCommon*: *ssb-perRACH-OccasionAndCB-PreamblesPerSSB* and *totalNumberOfRA-Preambles.* The detailed mapping rule is specified in TS 38.213 section 8.1, as following:

For Type-1 random access procedure, a UE is provided a number N of SS/PBCH blocks associated with one PRACH occasion and a number R of contention based preambles per SS/PBCH block per valid PRACH occasion by *ssb-perRACH-OccasionAndCB-PreamblesPerSSB.*

A UE is provided a number *N* of SS/PBCH blocks associated with one PRACH occasion and a number *R* of contention-based preambles per SS/PBCH block per valid PRACH occasion by *ssb-perRACH-OccasionAndCB-PreamblesPerSSB.* If *N* <1, one SS/PBCH block is mapped to 1/*N* consecutive valid PRACH occasions and R contention based preambles with consecutive indexes associated with the SS/PBCH block per valid PRACH occasion start from preamble index 0. If N ≥1, R contention based preambles with consecutive indexes associated with SS/PBCH block *n*, $0 \leq n \leq N$-1, per valid PRACH occasion start from preamble index $n \cdot N_{\text{preamble}}^{\text{total}} / N$ where $N_{\text{preamble}}^{\text{total}}$ is provided by *totalNumberOfRA-Preambles* and is an integer multiple of *N*.

SS/PBCH block indexes provided by *ssb-PositionsinBurst* in *SIB1* or in *ServingCellConfigCommon* are mapped to valid PRACH occasions in the following order where the parameters are described in [4, TS 38.211].

- First, in increasing order of preamble indexes within a single PRACH occasion

- Second, in increasing order of frequency resource indexes for frequency multiplexed PRACH occasions

- Third, in increasing order of time resource indexes for time multiplexed PRACH occasions within a PRACH slot

- Fourth, in increasing order of indexes for PRACH slots

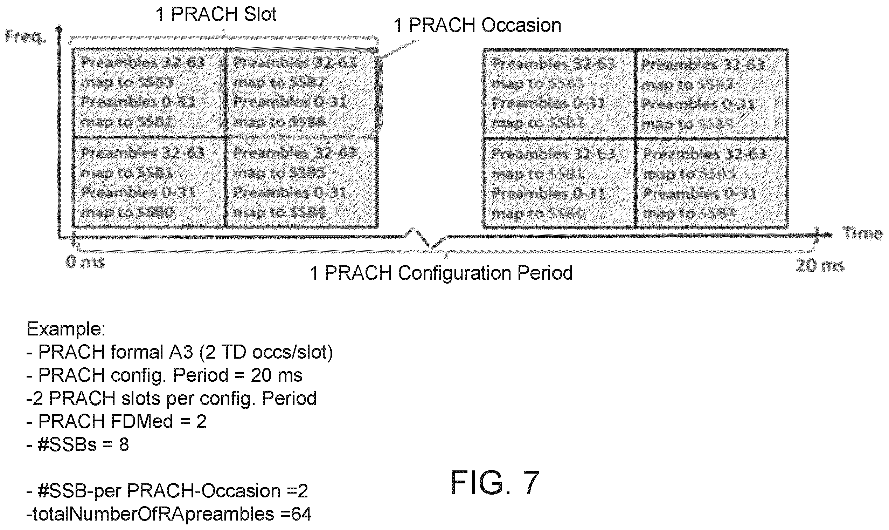

FIG. 7 shows an example of the mapping between SSBs and preambles in different PRACH occasions.

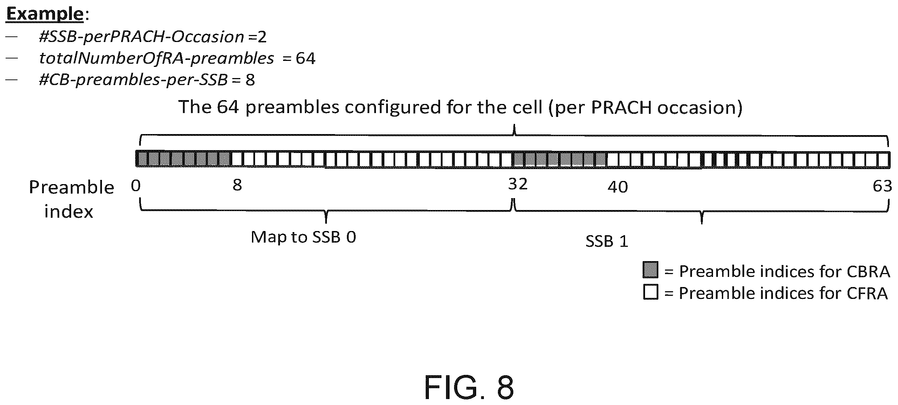

For each SSB, the associated preambles per PRACH occasion, $N_{\text{preamble}}^{\text{total}} / N$, are further divided into two sets for Contention Based Random Access (CBRA) and Contention Free Random Access (CFRA). The number of CB preambles per SSB per PRACH occasion, R, is signaled by the RRC parameter *ssb-perRACH-OccasionAndCB-PreamblesPerSSB.* Preamble indices for CBRA and CFRA are mapped consecutively for one SSB in one PRACH occasion, as shown in FIG. 8.

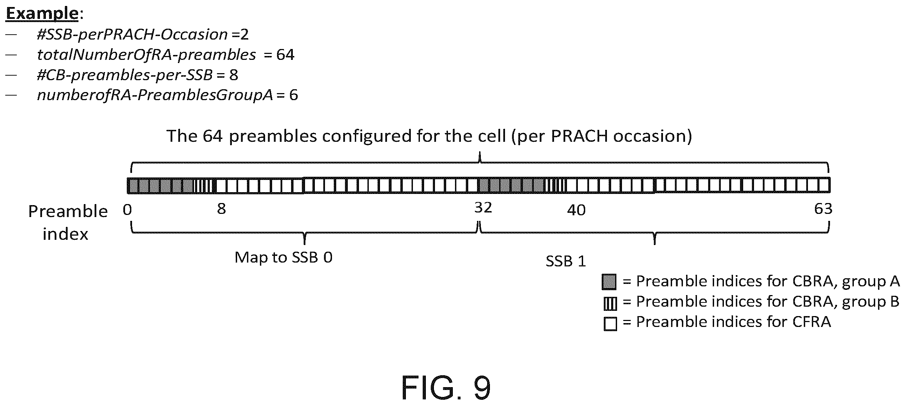

If Random Access Preambles group B is configured for CBRA, then, amongst the CBRA preambles (#*CB-preambles-per-SSB*) associated with an SSB, the first *numberOfRA-PreamblesGroupA* Random Access Preambles belong to Random Access Preambles group A, and the remaining Random Access Preambles associated with the SSB belong to Random Access Preambles group B. FIG. 9 shows an example, when Random Access Preambles group B is configured for CBRA. The RACH-ConfigCommon information element is shown below.

```
-- ASN1START
-- TAG-RACH-CONFIGCOMMON-START

RACH-ConfigCommon ::=                        SEQUENCE {
    Rach-ConfigGeneric                       RACH-ConfigGeneric,
    totalNumberOfRA-Preambles                INTEGER (1 .. 63)    OPTIONAL, --Need S
    ssb-perRACH-OccasionANDCB-PreamblesPerSSB        CHOICE {
        oneEighth                            ENUMERATED {n4, n8, n12, n16,
                                                 n20, n24, n28, n32, n36, n40,
                                                 n44, n48, n52, n56, n60, n64},
        oneFourth                            ENUMERATED {n4, n8, n12, n16,
                                                 n20, n24, n28, n32, n36, n40,
                                                 n44, n48, n52, n56, n60, n64},
        oneHalf                              ENUMERATED {n4, n8, n12, n16,
                                                 n20, n24, n28, n32, n36, n40,
                                                 n44, n48, n52, n56, n60, n64},
        one                                  ENUMERATED {n4, n8, n12, n16,
                                                 n20, n24, n28, n32, n36, n40,
                                                 n44, n48, n52, n56, n60, n64},
        two                                  ENUMERATED {n4, n8, n12, n16,
                                                 n20, n24, n28, n32},
        four                                 INTEGER (1 .. 16),
        eight                                INTEGER (1 .. 8),
        sixteen                              INTEGER (1 .. 4),
    }                                        OPTIONAL,     -- Need M

    groupBconfigured                         SEQUENCE {
        ra-Msg3SizeGroupA                    ENUMERATED {b56, b144, b208, b256, b282,
                                                 b480, b640, b800, b1000, b72, spare6,
                                                 spare5, spare4, spare3, spare2, spare1},

        messagePowerOffsetGroupB             ENUMERATED { minusinfinity, dB0, dB5, dB8,
                                                 dB10, dB12, DB15, dB18},
        numberOfRA-PreamblesGroupA           INTEGER (1 .. 64)
}
```

According to TS 38.213, one of the two conditions must be met in order for a UE to select Random Access Preambles group B for PRACH transmission:

Condition 1: potential Msg3 size (UL data available for transmission plus MAC header and, where required, MAC CEs) is greater than *ra-Msg3SizeGroupA* and the pathloss is less than *PCMAX* (of the Serving Cell performing the Random Access Procedure) - *preambleReceivedTargetPower- msg3-DeltaPreamble - messagePowerOffsetGroupB;* or

Condition 2: the Random Access procedure was initiated for the CCCH logical channel and the CCCH SDU size plus MAC subheader is greater than *ra-Msg3SizeGroupA.*

1.3. RRC Establishment Cause for UE differentiation

In step 3 of the 4-step random access procedure shown in FIG. 1, a UE includes the *rrcSetupRequest* message in Msg3. The *rrcSetupRequest* message contains the parameter, *establishmentCause,* which indicates the establishment cause that triggers the connection establishment (e.g., emergency call, mission critical services, multimedia priority services, etc.).

A network node 104 (e.g., a gNB) identifies the type of connection request from the UE by decoding the establishment cause received in msg3. Based on the received establishment clause, the network node 104 decides whether this request shall be admitted or rejected, based on the network traffic load situation and available resource in the network.

1.4. NR Rel-16 for MsgA configuration

1.4.1. MsgA preamble configuration

The RACH occasions for 2-step RACH shown in FIG. 2 can be either separately configured (also known as Type-2 random access procedure with separate configuration of PRACH occasions with Type-1 random access procedure) or are shared with 4-step RACH (also known as Type-2 random access procedure with common configuration of PRACH occasions with Type-1 random access procedure) in which case different set of preamble IDs will be used.

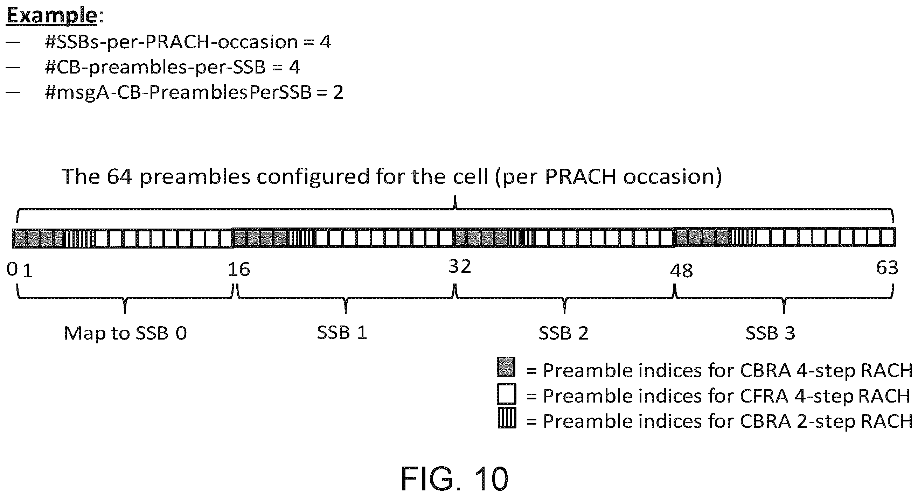

For Type-2 random access procedure with common configuration of PRACH occasions with Type-1 random access procedure, a UE is provided a number $N$ of SS/PBCH blocks associated with one PRACH occasion by *ssb-perRACH-OccasionAndCB-PreamblesPerSSB* and a number Q of contention based preambles per SS/PBCH block per valid PRACH occasion by *msgA-CB-PreamblesPerSSB.* The PRACH transmission can be on a subset of PRACH occasions associated with a same SS/PBCH block index for a UE provided with a PRACH mask index by *msgA-ssb-sharedRO-Maskindex.* An example of the SSB to RO mapping and the preamble allocation (in which only one preamble group is assumed) is provided in FIG. 10.

For Type-2 random access procedure with separate configuration of PRACH occasions with Type-1 random access procedure, a UE is provided a number N of SS/PBCH blocks associated with one PRACH occasion and a number R of contention based preambles per SS/PBCH block per valid PRACH occasion by ssb-*perRACH-OccasionAndCB-PreamblesPerSSB-msgA* when provided; otherwise, by *ssb-perRACH-OccasionAndCB-PreamblesPerSSB.* Because the SSB to RO mapping and the preamble allocation are independently configured, the example provided for 4-step RACH in FIG. 9 is also valid for this case of 2-step RACH except that the parameters are separately configured for 2-step RACH.

1.4.2. MsgA PUSCH configuration

A PUSCH occasion is defined as the time frequency resource used for one PUSCH transmission. For one msgA PUSCH occasion, one or more DMRS resources can be configured, one of which will be selected for each PUSCH transmission with in the PUSCH occasion.

A set of PUSCH occasions are configured per MsgA PUSCH configuration which are relative to and mapped by a group of preambles in a set of ROs in one PRACH slot. A mapping between one or multiple PRACH preambles and a PUSCH occasion associated with a DMRS resource is according to the mapping order as described below.

Each consecutive number of $N_{preamble}$ preamble indexes from valid PRACH occasions in a PRACH slot

- first, in increasing order of preamble indexes within a single PRACH occasion

- second, in increasing order of frequency resource indexes for frequency multiplexed PRACH occasions

- third, in increasing order of time resource indexes for time multiplexed PRACH occasions within a PRACH slot are mapped to a valid PUSCH occasion and the associated DMRS resource

- first, in increasing order of frequency resource indexes $f_{id}$ for frequency multiplexed PUSCH occasions

- second, in increasing order of DMRS resource indexes within a PUSCH occasion, where a DMRS resource index $DMRS_{id}$ is determined first in an ascending order of a DMRS port index and second in an ascending order of a DMRS sequence index [4, TS 38.211]

- third, in increasing order of time resource indexes $t_{id}$ for time multiplexed PUSCH occasions within a PUSCH slot

- fourth, in increasing order of indexes for $N_s$ PUSCH slots

where $N_{preamble} = ceil(T_{preamble}/T_{PUSCH})$, $T_{preamble}$ is a total number of valid PRACH occasions per association pattern period multiplied by the number of preambles per valid PRACH occasion provided by *msgA-PUSCH-PreambleGroup,* and $T_{PUSCH}$ is a total number of valid PUSCH occasions per PUSCH configuration per association pattern period multiplied by the number of DMRS resource indexes per valid PUSCH occasion provided by *msgA-DMRS-Config.*

1.5. 5G Use Cases and Services

1.5.1. Mission Critical Communications

First responders, such as fire-fighters, policemen and emergency medical service personnel, require fast, reliable and secure communications in various mission critical (MC) situations. During major emergency incidents, such as nature disasters, there can be a high demand of MC traffic for supporting first responders' rescue operation on site. At the same time, mobile data traffic generated by public users can increase significantly, e.g., for making emergency calls, sharing information to friends or relatives. If first responders and general public users share the same network, it is crucial to ensure the flow of critical information (e.g., MC services and emergency calls) no matter how busy the network is. This brings stringent requirements for 5G access control mechanisms to be able to early identify and prioritize access requests from mission critical users, to guarantee that they are accepted and properly served even when the network experiences congestion.

1.5.2. Small Data Transmission

NR supports the RRC_INACTIVE state, and UEs with infrequent (periodic and/or non-periodic) data transmission are generally maintained by the network in the RRC_INACTIVE state. Until NR Rel-16, the RRC_INACTIVE state did not support data transmission. Hence, the UE had to resume the connection (e.g., move to the RRC_CONNECTED state) for any DL (e.g., mobile termination (MT)) and UL (e.g., mobile originating (MO)) data. Connection setup and subsequently release to INACTIVE state happens for each data transmission however small and infrequent the data packets are. This results in unnecessary power consumption and signaling overhead.
A work item for support of small data transmission (SDT) in NR release 17 is approved in RAN #86.
In RAN2 #111-e meeting, where it has been agreed that both 2-step RACH and 4-step RACH will be applied to RACH based uplink small data transmission via Msg3 PUSCH or MsgA PUSCH. To support SDT on Msg3 PUSCH or MsgA PUSCH, the network node needs to be able to identify/differentiate an access request related to SDT over other access requests.

1.5.3. Satellite Communications

Satellite access networks have been playing a complementary role in the communications ecosystem. Despite the wide deployment of terrestrial mobile networks, there are unserved or underserved areas around the globe due to economic rationales. For example, providing coverage in rural or remote areas has been challenging in many countries because the investment cost may not justify the expected revenue. In contrast, a single communication satellite can cover a large geographic area, and, thus, it might be economically appealing to use satellite communications to augment terrestrial networks to provide connectivity in rural and remote areas. In urban areas, high-throughput satellites communications systems may help offload traffic in terrestrial networks. Another potential alternative is to use satellites for backhauling, fostering the rollout of 5G services with potentially reduced costs in rural and remote areas.
The large satellite coverage can also benefit communication scenarios with airborne and maritime platforms (onboard aircrafts or vessels), while being attractive in certain machine-to-machine and telemetry applications. Additionally, satellites are resilient to natural disasters on earth, making satellite communications key for emergency services in case that the terrestrial network infrastructures are degraded. Therefore, if multiple services (e.g., small data transmission (SDT), MC Services, TV broadcast, or SDT services) are supported by satellite communications, it is beneficial for a satellite base station to be able to differentiate different services or UE types at an early stage so that it can optimize its own the admission control and scheduling decisions, or/and better coordinate with the terrestrial network nodes to secure the flow of critical information.

1.5.4. 5G Network slicing

Network slicing is a concept introduced in 5G to enable service differentiation on a common network infrastructure. Each slice can be a collection of network functionalities or/and resources that are optimized to meet the specific requirement for a service type. For instance, a network can configure different slices for enhanced Mobile Broadband (eMBB) service, vehicle-to-everything (V2X) service, MC service, etc. The current NR standard supports only resource separation of user plane data, not the full separation of control plane resources, meaning that all network slices share the same RACH configuration for UEs in the RRC Idle/Inactive states.

1.6 Additional relevant prior art

US 2013/242730 A1 discloses random access procedures in wireless systems.

US 2020/037297 A1 discloses new radio random access in beamforming systems.

JP 2019 121953 A discloses a terminal device, base station device, communication method, and integrated circuit.

SUMMARY

Based on the existing NR Rel-15 and Rel-16 4-step RACH procedure, during an initial access phase, the earliest time for a network node to identify a UE type or a service type is in step 3 of the RACH procedure (e.g., after a successful reception of the RRC establishment caused in msg3 transmitted from the UE). In the existing procedures, regardless of subscription type, service type, and/or configured network slice, all UEs in RRC Idle or Inactive states are configured with the same 4-step RACH configuration (e.g., the same PRACH occasions and the same PRACH configuration index, etc.) for transmitting msg1 when performing random access. Therefore, in existing procedures, it is not possible for a network node to differentiate or identify any of the UE type, the service type, and the slice ID by detecting msg1, and a network node cannot prioritize Msg1/Msg2/Msg3 transmissions for certain high priority services or some slices in random access.

In addition, according to the current NR standard (NR Rel-15 and Rel-16), the establishmentCause for all mission critical (MC) UEs will be set to mcs-PriorityAccess, regardless of the priority/role of this MC UE. This implies that a network node cannot further differentiate between different MC UEs/Services in an initial access procedure.

For a 2-step RA procedure in CFRA, the reliability of msgA preamble part and PUSCH part might be quite different due to the PUSCH colliding in 2-step RACH while msg3 PUSCH in 4-step RACH is dynamically scheduled by RAR (for initial transmission) or DCI (for retransmission). In some other aspects, the msgA PUSCH resource used for higher priority may be prioritized so that the msgA PUSCH performance can be assured (e.g., if msgA preamble part cannot be used for UE priority identification).

For some public safety use cases, the priority level of each public safety UE may change dynamically according to the emergency situations. For example, after conducting his/her/its mission, a public safety UE in a first responder group can be moved to a second responder group, which has a relatively lower priority as compared to the first responder group, but its priority is still higher than normal users. Similarly, a public safety UE in a second responder group can be dynamically moved (e.g., by the command center) to a first responder group, which as a relatively higher priority as compared to the second responder group.

For Radio Resource Control (RRC) connected UEs, the priority information is typically known at the network. However, if the priority level or UE capability is dynamically changed in the situations described above, then, the priority information of this UE that is stored at the network side can be outdated. Therefore, a mechanism is needed to enable the network to know the updated UE priority level.

The present invention aims to overcome one or more of the above discussed problems.

The invention is set out in the independent claims. Further embodiments are set out in the dependent claims.

BRIEF DESCRIPTION OF THE DRAWINGS

The accompanying drawings, which are incorporated herein and form part of the specification, illustrate various embodiments.

FIG. 1 illustrates a four-step random access procedure for initial access.

FIG. 2 illustrates a two-step random access procedure for initial access.

FIG. 3A illustrates a 4-step random access type contention free random access.

FIG. 3B illustrates a 4-step random access type contention free random access.

FIG. 4 illustrates a PRACH configuration in NR.

FIG. 5 illustrates an example of one SSB per PRACH occasion.

FIG. 6 illustrates an example with 2 SSBs per PRACH occasion.

FIG. 7 illustrates the mapping between SSB and random-access preambles.

FIG. 8 illustrates of the associated preambles for CBRA and CFRA per SSB per PRACH occasion.

FIG. 9 illustrates the associated preambles for CBRA and CFRA per SSB per PRACH occasion, when Random Access Preambles group B is configured.

FIG. 10 illustrates the associated preambles for CBRA and CFRA per SSB per PRACH occasion, when random access channel occasions (ROs) for 2-step RACH and 4-step RACH are shared.

FIG. 11A illustrates a RACH-ConfigDedicated information element for 4-step random access type according to some aspects.

FIG. 11B illustrates a RACH-ConfigDedicated information element for 2-step random access type according to some aspects.

FIG. 12 illustrates an information element with a separate set of PUSCH occasion configuration for CFRA with a 2-step RA type according to some aspects.

FIG. 13 illustrates a RACH-ConfigDedicated information element with a separate set of SSB resource list or CSI-RS resource list for high priority UEs to do CFRA according to some aspects.

FIG. 14 illustrates a separate preamble ID ra-PreambleIndexHighPrio in CFRA-SSB-Resource and/or CFRA-CSIRS-Resource carried by a RACH-ConfigDedicated information element for higher priority UEs to do CFRA according to some aspects.

FIG. 15 is a flow chart illustrating a process performed by a user equipment according to some aspects.

FIG. 16 is a block diagram of a user equipment according to some aspects.

FIG. 17 is a block diagram of a user equipment according to some aspects.

FIG. 18 is a flow chart illustrating a process performed by a network node according to some aspects.

FIG. 19 is a block diagram of a network node according to some aspects.

FIG. 20 is a block diagram of a network node according to some aspects.

DETAILED DESCRIPTION

2. Terminology

In this application, the term "node" can be a network node or a user equipment (UE). Examples of network nodes include, but are not limited to, a NodeB, a base station (BS), a multistandard radio (MSR) radio node such as a MSR BS, an eNodeB, a gNodeB, a Master eNB (MeNB), a Secondary eNB (SeNB), integrated access backhaul (IAB) node, network controller, radio network controller (RNC), base station controller (BSC), relay, donor node controlling relay, base transceiver station (BTS), Central Unit (e.g. in a gNB), Distributed Unit (e.g. in a gNB), Baseband Unit, Centralized Baseband, C-RAN, access point (AP), transmission points, transmission nodes, remote radio unit (RRU), remote radio head (RRH), nodes in distributed antenna system (DAS), core network node (e.g. MSC, MME, etc.), O&M, OSS, SON, positioning node (e.g. E-SMLC).

In this application, the term "user equipment" or "UE" is a non-limiting term that refers to any type of wireless device communicating with a network node and/or with another UE in a cellular or mobile communication system. Examples of UEs include, but are not limited to, a target device, a device to device (D2D) UE, a vehicular to vehicular (V2V), a machine type UE, an machine type communication (MTC) UE, a UE capable of machine to machine (M2M) communication, a PDA, a Tablet, a mobile terminal(s), a smart phone, laptop embedded equipment (LEE), laptop mounted equipment (LME), and USB dongles.

In this application, the terms "radio network node," "network node," and "NW node" is generic terminology that refers to any kind of network node including but not limited to a base station, a radio base station, a base transceiver station, a base station controller, a network controller, an evolved Node B (eNB), a Node B, a gNodeB (gNB), a relay node, an access point (AP), a radio access point, a Remote Radio Unit (RRU), a Remote Radio Head (RRH), a Central Unit (e.g. in a gNB), a Distributed Unit (e.g. in a gNB), a Baseband Unit, a Centralized Baseband, and a C-RAN.

In this application, the term "radio access technology" or "RAT" may refer to any RAT including, for example and without limitation, UTRA, E-UTRA, narrow band internet of things (NB-IoT), WiFi, Bluetooth, next generation RAT, New Radio (NR), 4G, and 5G. Any of the equipment denoted by the terms "node," "network node," or "radio network node" may be capable of supporting a single or multiple RATs.

## 3. Aspects

In some aspects, a network node 104 may configure different physical random access channel (PRACH) configurations and/or different physical uplink shared channel (PUSCH) configurations for different groups. In some aspects, the groups may be different UE and/or service groups that are associated to different priorities for contention free random access (CFRA) procedure. In some aspects, the groups may be network slice groups. In some aspects, a UE 102 may select which configuration to use for random-access preamble transmission based on its current associated group (e.g., priority group). In some aspects, by detection of the random-access preamble transmitted in a PRACH occasion from a UE 102, the network node 104 can identify the UE priority, UE type, service priority, service type, and/or configured network slice. In some aspects, based on the identified UE priority, UE type, service priority, service type, and/or configured network slice ID, the UE 102 may make an early decision on differentiated admission control and/or traffic steering for this UE 102.

In some aspects, UEs 102 may be pre-configured to different groups depending on the UE priority and/or type, the service priority and/or type, and/or a configured network slices. For example, in some aspects, different groups may be defined based on the UE Access Identity numbers or/and Access Categories. For another example, different groups may be defined based on the network slice IDs. For yet another example, different groups may be defined based on the service type (e.g., Mobile Broadband (MBB), Mission Critical Services, small data transmission (SDT), air-to-ground communications (A2G), etc.).

In some aspects, in addition to the legacy PRACH configuration for 4-step random access procedure in NR Rel-15 and for 2-step random access procedure in NR-Rel-16, at least one additional PRACH configuration may be added in common or dedicated radio resource control (RRC) signaling, where the legacy and the newly added PRACH configurations are associated to different groups. In some aspects, these different groups may be defined based on the UE/service priority, UE/service type, and/or network slice IDs. In some aspects, if only one additional PRACH configuration is added, then the added PRACH configuration may be associated with a UE/Service group that has a higher priority. In some aspects, if two or more additional PRACH configurations are added, then the legacy PRACH configuration may be associated with the lowest priority group. In some aspects, the legacy and the one or more newly added PRACH configurations may be differentiated in at least one of the following parameters: valid PRACH occasions, PRACH periodicities, preamble formats, configured preamble indexes per PRACH occasion, transmitting power, and power ramping step.

Different aspects of methods, apparatuses (e.g., UEs 102 and/or network nodes 104), and systems for configuring an additional PRACH configuration (e.g., in a system information block 1 (SIB1)) are described below. Any of these aspects may be extended for the cases where two or more PRACH configurations are added. The aspects and examples below focus on the case of defining different PRACH configurations based on the UE/service priority level. However, the methods may be used for defining different PRACH configurations based on the UE/service type, network slice IDs, etc.

### 3.1 Differentiated PRACH Occasions and/or PUSCH Occasions

In some aspects, PRACH occasions for one or more newly added PRACH configurations may be configured separately from the PRACH occasions configured by the legacy configuration. In some aspects, for CFRA with 2-step RA type, the PUSCH occasions may be separately included for a particular group (e.g., high priority UEs), or the masked ROs by a PRACH mask can be used for the particular group (e.g., higher priority UEs). In some aspects, as described below, the different PRACH occasions and/or PUSCH occasions may be associated with different priorities (e.g., different UE priorities or different service priorities). However, this is not required, and, in some alternative aspects, the different PRACH occasions and/or PUSCH occasions may be used be associated with different types (e.g., different UE types or different service types) or different network slices.

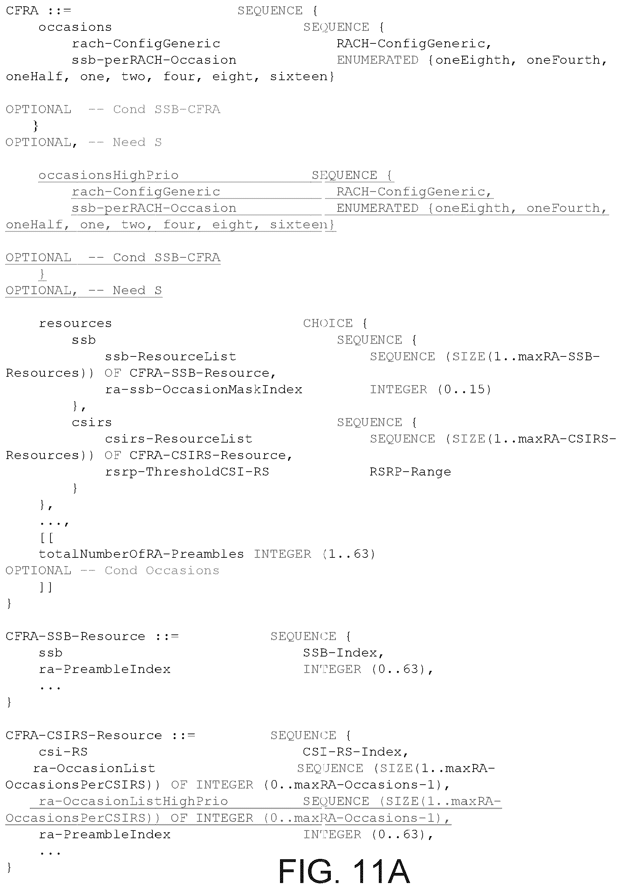

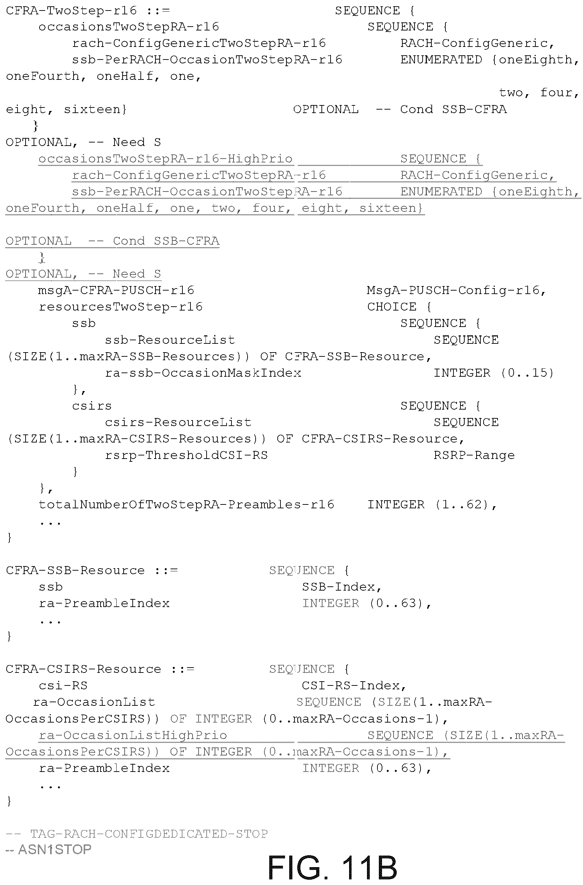

In some aspects, for CFRA, some dedicated signaling for configuring RO resources may be provided for higher priority RA in order to differentiate with normal priority RA. In some aspects, for CFRA, a separate RO list may be configured from high layer for higher priority UEs, where the RACH occasion (RO) list may be associated to a list of synchronization signals/physical broadcast channel block (SSB) resources or channel state information-reference signal (CSI-RS) resources. In some aspects, for CFRA with 4-step RA type, a set of ROs may be defined in RACH-ConfigDedicated information element (IE) for high priority UEs. FIG. 11A illustrates an example of a RACH-ConfigDedicated IE for 4-step random access type with a set of ROs for high priority UEs shown with underlining. In some aspects, for CFRA with 2-step RA type, a separate set of ROs may be defined in RACH-ConfigDedicated IE for high priority UEs. FIG. 11B illustrates a RACH-ConfigDedicated IE for 2-step random access type with a set of ROs for high priority UEs shown with underlining.

In some aspects, for CFRA with 2-step RA type, a separate MsgA PUSCH resource configuration may be configured from high layer for higher priority UEs. In some aspects, the MsgA PUSCH resource may be: (i) a demodulation reference signal (DMRS) resource for msgA PUSCH including a DMRS port and/or a DMRS sequence, (ii) a time and/or frequency resource for msgA PUSCH, (iii) power control related parameters for msgA PUSCH including a power ramping step size, a power ramping counter, a power offset relative to the preamble received target power, a power scaling factor for scaling an estimated path loss, and/or a transmit power command (TPC), (iv) a listen before talk (LBT) type of msgA PUSCH, (v) a cyclic prefix (CP) extension of msgA PUSCH, (vi) a frequency hopping configuration of msgA PUSCH, (vii) a waveform of msgA PUSCH, (viii) an interlace configuration of msgA PUSCH, and/or (ix) a modulation coding scheme (MCS) configuration of msgA PUSCH.

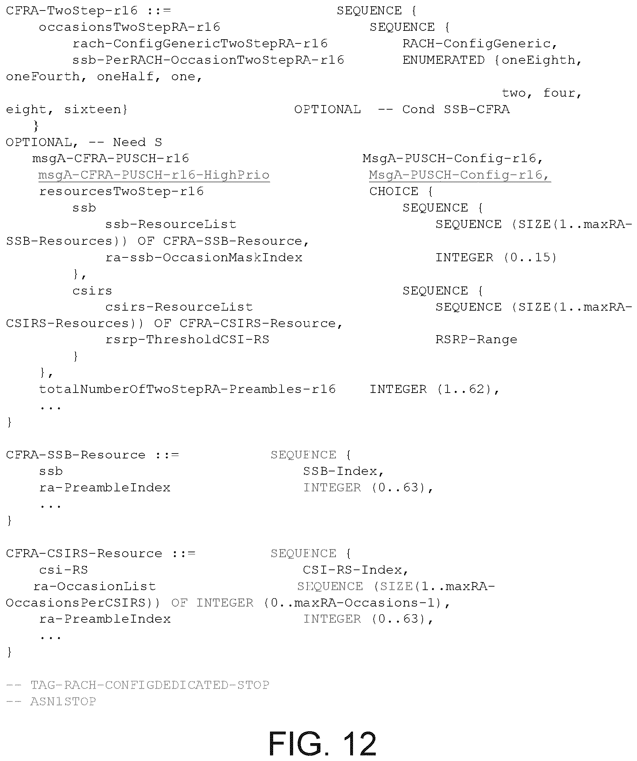

FIG. 12 illustrates an example of an information element for 2-step RA type with a separate set of PUSCH occasion configuration shown with underlining. As another example, for CFRA with 2-step RA type, one of the PUSCH occasion with a DMRS resource may be provided to the UE 102 with a higher priority via radio resource control (RRC) signaling or via a predetermined value.

In some aspects, in CFRA, a PRACH mask may invalidate some of the ROs so that they will not be used for normal RA, and these ROs may be used for higher priority RA. In some aspects, for CFRA, ROs masked by ra-ssb-OccasionMaskIndex may be used by high priority UEs, where the ROs masked are associated to a list of SSB resources configured.

3.2 Differentiated Preamble Indexes per PRACH Occasion

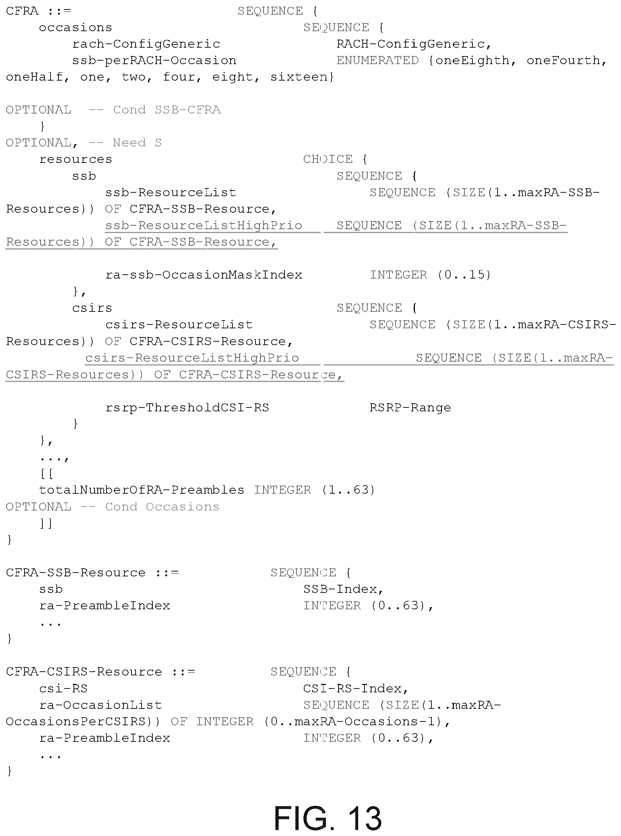

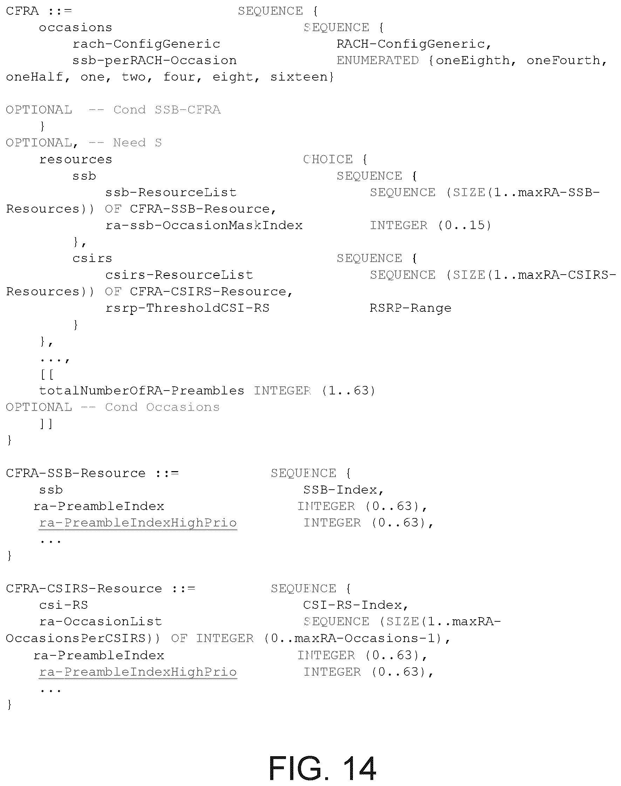

In some aspects, different groups (e.g., UE priority groups) may share the same configuration of valid PRACH occasions, but the different groups may be configured with non-overlapping sets of preamble indexes per PRACH occasion. In some aspects, for CFRA, a separate preamble list and/or SSB resource list and/or CSI-RS resource list may be configured from high layer for higher priority UEs. In some aspects, a separate set of SSB resource list or CSI-RS resource list may be provided in in RACH-ConfigDedicated for higher priority UEs to do CFRA. FIG. 13 illustrates an example of a RACH-ConfigDedicated information element with a separate set of SSB resource list or CSI-RS resource list for high priority UEs shown with underlining. In some alternative aspects, a separate preamble ID ra-PreambleIndex-HighPrio may be provided in CFRA-SSB-Resource and/or CFRA-CSIRS-Resource carried by the RACH-ConfigDedicated IE for higher priority UEs to do CFRA. FIG. 14 illustrates an example of a separate preamble ID ra-PreambleIndexHighPrio in CFRA-SSB-Resource and/or CFRA-CSIRS-Resource carried by a RACH-ConfigDedicated information element for higher priority UEs shown with underlining.

In some aspects, the non-overlapping sets of preamble indexes per PRACH occasion may be associated with different priorities (e.g., different UE priorities or different service priorities). However, this is not required, and, in some alternative aspects, the non-overlapping sets of preamble indexes per PRACH occasion may be used be associated with different types (e.g., different UE types or different service types) or different network slices.

3.3 Flowcharts

In some aspects, for a 2-step random access procedure and/or a 4-step random access procedure, a network node 104 may configure different random-access preamble configurations (e.g., PRACH occasions, PUSCH occasions, and/or preamble indexes) for different UE/service groups that are associated to different priorities, different service types, or/and different network slice IDs. In some aspects, a UE 102 may select which configuration to use for the random-access preamble transmission based on the associated group of its access request.

In some aspects, in 2-step random access procedure, a network node 104 may configure different msgA PUSCH resources for different groups based on UE/Service priority, UE/service type, or/and network slice ID. In some aspects, a higher priority UE 102 may then select the separate msgA PUSCH resource so that a more reliable msgA PUSCH can be used to inform the network node 104 of the UE priority.

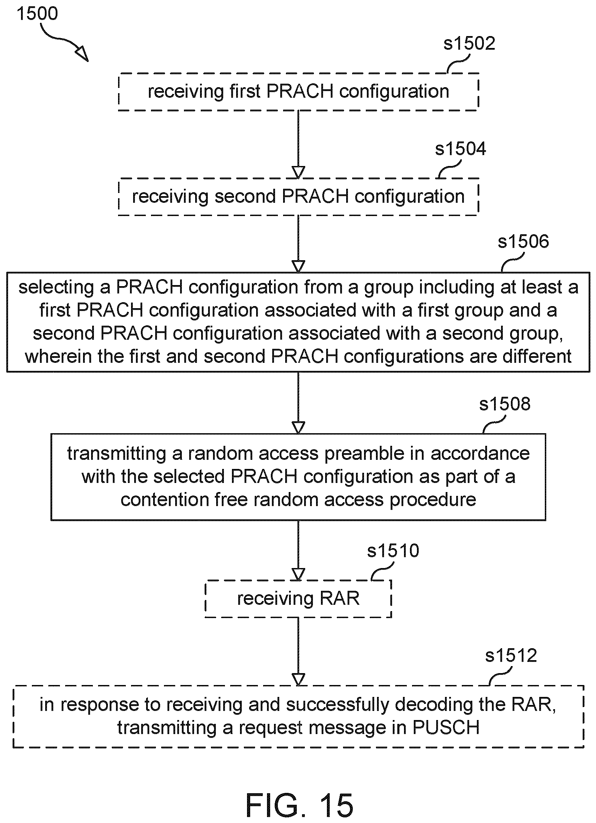

FIG. 15 illustrates a process 1500 performed by a user equipment (UE) 102 according to some aspects. In some aspects, the process 1500 may include optional steps 1502 and 1504 in which the UE 102 receives first and second physical random access channel (PRACH) configurations, respectively. In some aspects, the first and second PRACH configurations may be received as part of a system information block (e.g., SIB1).

In some aspects, the process 1500 may include a step 1506 in which the UE 102 selects a physical random access channel (PRACH) configuration from a group including at least a first PRACH configuration associated with a first group and a second PRACH configuration associated with a second group. In some aspects, the first and second PRACH configurations may be different. In some aspects, the first and second PRACH configurations may be different in at least one of the following parameters: valid PRACH occasions, PRACH configuration periodicities, preamble formats, configured preamble indexes per random access occasion, transmitting power, and power ramping step.

In some aspects, the group may further include a third PRACH configuration associated with a third group. In some aspects, the first, second, and third PRACH configurations may be different. In some aspects, the first, second, and third PRACH configurations may be received in a system information block (e.g., SIB1).

In some aspects, the selection in step 1506 may be based on a priority of the UE 102, a type of the UE 102, a priority of a service, a type of the service, and/or a network slice.

In some aspects, the selection in step 1506 may be based on a priority of the UE 102. In some aspects (e.g., some selection based on UE priority aspects), the first group may be associated with a first priority, the second group may be associated with a second priority, the second priority may be higher than the first priority, the first PRACH may be selected in step 1506 if the UE has the first priority, and the second PRACH may be selected in step 1506 if the UE has the second priority.

In some aspects, the selection in step 1506 may be based on a type of the UE 102. In some aspects (e.g., some selection based on UE type aspects), the second group may be associated with a set of one or more UE types, and the second PRACH may be selected in step 1506 if the type of the UE 102 is within the set of one or more UE types. In some aspects, the set of one or more UE types may include, for example and without limitation, a mission critical (MC) UE and/or a multimedia priority UE. In some aspects, the first group may be associated with a different set of one or more UE types, and the first PRACH may be selected in step 1506 if the type of the UE 102 is within the different set of one or more UE types. In some aspects, the type of the UE may be a subscription type.

In some aspects, the process 1500 may be for establishing a connection with the network node 104 to obtain a service. In some aspects, the service may be, for example and without limitation, an emergency call, a mission critical (MC) service, a multimedia priority service, a mobile broadband (MBB) service, an enhanced mobile broadband (eMBB) service, a vehicle-to-everything (V2X) service, a television broadcast, a small data transmission (SDT) service, and/or an air-to-ground communication (A2G) service.

In some aspects, the selection in step 1506 may be based on a priority of the service. In some aspects (e.g., some selection based on service priority aspects), the first group may be associated with a first priority, the second group may be associated with a second priority, the second priority may be higher than the first priority, the first PRACH may be selected in step 1506 if the service has the first priority, and the second PRACH may be selected in step 1506 if the service has the second priority.

In some aspects, the selection in step 1506 may be based on a type of the service. In some aspects (e.g., some selection based on service type aspects), the second group may be associated with a set of one or more service types, and the second PRACH may be selected if the type of the service is within the second set of one or more service types. In some aspects, the set of one or more service types may include, for example and without limitation, an MC service. In some aspects (e.g., some selection based on service type aspects), the first group may be associated with a different set of one or more service types, and the first PRACH may be selected in step 1506 if the type of the service is within the different set of one or more service types. In some aspects, the type of the service may be one of an emergency call, an MC service, a multimedia priority service, a MBB service, an eMBB service, a V2X service, a television broadcast, an SDT service, or an A2G service.

In some aspects, the selection in step 1506 may be based on a network slice identification (ID). In some aspects (e.g., some selection based on network slice aspects), the second group may be associated with a set of one or more network slice IDs, and the second PRACH is selected in step 1506 if the network slice ID is within the second set of one or more network slice IDs. In some aspects (e.g., some selection based on network slice aspects), the first group may be associated with a different set of one or more network slice IDs, and the second PRACH may be selected in step 1506 if the network slice ID is within the different set of one or more network slice IDs.

In some aspects, the process 1500 may include a step 1508 in which the UE 102 transmits a random access preamble in accordance with the selected PRACH configuration as part of a contention free random access procedure. In some aspects, the process 1500 may further include receiving a random access preamble assignment for a contention free random access procedure, and the random access preamble may be transmitted in step 1508 in accordance with the selected PRACH configuration and the random access preamble assignment. In some aspects (e.g., 2-step random access procedure aspects), the process 1500 may further include receiving a physical uplink shared channel (PUSCH) assignment for the contention free random access procedure. In some aspects (e.g., 2-step random access procedure aspects), the step 1508 may include the UE 102 transmitting a request message in physical uplink shared channel (PUSCH) with the random access preamble. In some aspects, the request message may be transmitted in accordance with the PUSCH assignment.

In some aspects, the process 1500 may further include an optional step 1510 in which the UE 102 receives a random access response (RAR) to the transmitted random access preamble. In some aspects (e.g., 2-step random access procedure aspects), the RAR may include a UE identifier assignment, timing advance information, and a contention resolution message.

In some aspects (e.g., 4-step random access procedure aspects), the process 1500 may further include an optional step 1512 in which the UE 102, in response to receiving and successfully decoding the RAR, transmits a request message (e.g., for requesting terminal identification and radio resource control (RRC) connection establishment) in physical uplink shared channel (PUSCH).

In some aspects, the first PRACH configuration may include a first list of PRACH occasions, the second PRACH configuration may include a second list of PRACH occasions, and the first and second lists may be different. In some aspects, the random access preamble may be transmitted in step 1508 in a PRACH occasion of the first list if the selected PRACH configuration is the first PRACH configuration, and the random access preamble is transmitted in step 1508 in a PRACH occasion of the second list if the selected PRACH configuration is the second PRACH configuration. In some aspects, the second list of PRACH occasions may include one or more PRACH occasions masked by a PRACH mask. In some aspects, the first list of PRACH occasions may be associated with a first list of synchronization signals/physical broadcast channel block (SSB) resources, the second list of PRACH occasions is associated with a second list of SSB resources, and the first and second lists of SSB resources are different. In some aspects, the random access preamble may be transmitted in step 1508 with one or more SSB resources in the first list of SSB resources if the selected PRACH configuration is the first PRACH configuration, and the random access preamble may be transmitted in step 1508 with one or more SSB resources in the second list of SSB resources if the selected PRACH configuration is the second PRACH configuration.

In some aspects, the first list of PRACH occasions may be associated with a first list of channel state information-reference signal (CSI-RS) resources, the second list of PRACH occasions may be associated with a second list of CSI-RS resources, and the first and second lists of CSI-RS resources may be different. In some aspects, the random access preamble may be transmitted in step 1508 with one or more CSI-RS resources in the first list of CSI-RS resources if the selected PRACH configuration is the first PRACH configuration, and the random access preamble may be transmitted in step 1508 with one or more CSI-RS resources in the second list of CSI-RS resources if the selected PRACH configuration is the second PRACH configuration. In some aspects, the first and second lists of PRACH occasions may be defined in an information element (IE) for random access ConfigDedicated information element (IE).

In some aspects, the first PRACH configuration may have a first set of preamble indexes per PRACH occasion, the second PRACH configuration may have a second set of preamble indexes per PRACH occasion, and the first and second sets of preamble indexes may not overlap. In some aspects, the first set of preamble indexes may be associated with a first list of synchronization signals/physical broadcast channel block (SSB) resources, the second set of preamble indexes may be associated with a second list of SSB resources, and the first and second lists of SSB resources may be different. In some aspects, the random access preamble may be transmitted in step 1508 with one or more SSB resources in the first list of SSB resources if the selected PRACH configuration is the first PRACH configuration, and the random access preamble may be transmitted with one or more SSB resources in the second list of SSB resources if the selected PRACH configuration is the second PRACH configuration. In some aspects, the first set of preamble indexes may be associated with a first list of channel state information-reference signal (CSI-RS) resources, the second set of preamble indexes may be associated with a second list of CSI-RS resources, and the first and second lists of CSI-RS resources may be different. In some aspects, the random access preamble may be transmitted in step 1508 with one or more CSI-RS resources in the first list of CSI-RS resources if the selected PRACH configuration is the first PRACH configuration, and the random access preamble may be transmitted in step 1508 with one or more CSI-RS resources in the second list of CSI-RS resources if the selected PRACH configuration is the second PRACH configuration. In some aspects, the first and second sets of preamble indexes may be defined in an information element (IE) for random access ConfigDedicated information element (IE).

In some aspects, the first PRACH configuration may include a first physical uplink shared channel (PUSCH) resource configuration, the second PRACH configuration may include a second PUSCH resource configuration, and the first and second PUSCH resource configurations may be different. In some aspects, the step 1508 may further include transmitting a request message in PUSCH with the random access preamble, the request message may be transmitted with the first PUSCH resource configuration if the selected PRACH configuration is the first PRACH configuration, and the request message may be transmitted with the second PUSCH resource configuration if the selected PRACH configuration is the second PRACH configuration. In some aspects, the first and second PUSCH resource configurations may be different with respect to: (i) a demodulation reference signal (DMRS) resource for msgA PUSCH including a DMRS port and/or a DMRS sequence, (ii) a time and/or frequency resource for msgA PUSCH, (iii) power control related parameters for msgA PUSCH including a power ramping step size, a power ramping counter, a power offset relative to the preamble received target power, a power scaling factor for scaling an estimated path loss, and/or a transmit power command (TPC), (iv) a listen before talk (LBT) type of msgA PUSCH, (v) a CP extension of msgA PUSCH, (vi) a frequency hopping configuration of msgA PUSCH, (vii) a waveform of msgA PUSCH, (viii) an interlace configuration of msgA PUSCH, and/or (ix) MCS configuration of msgA PUSCH.

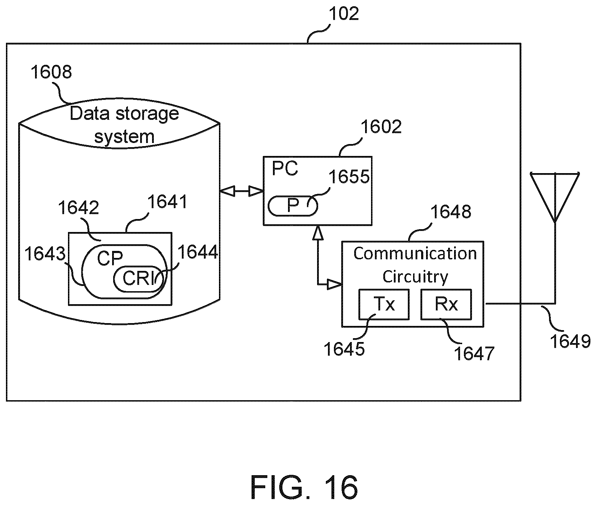

FIG. 16 is a block diagram of UE 102, according to some aspects. As shown in FIG. 16, UE 102 may comprise:

processing circuitry (PC) 1602, which may include one or more processors (P) 1655 (e.g., one or more general purpose microprocessors and/or one or more other processors, such as an application specific integrated circuit (ASIC), field-programmable gate arrays (FPGAs), and the like); communication circuitry 1648, which is coupled to an antenna arrangement 1649 comprising one or more antennas and which comprises a transmitter (Tx) 1645 and a receiver (Rx) 1647 for enabling UE 102 to transmit data and receive data (e.g., wirelessly transmit/receive data); and a local storage unit (a.k.a., "data storage system") 1608, which may include one or more non-volatile storage devices and/or one or more volatile storage devices. In some aspects where PC 1602 includes a programmable processor, a computer program product (CPP) 1641 may be provided. CPP 1641 includes a computer readable medium (CRM) 1642 storing a computer program (CP) 1643 comprising computer readable instructions (CRI) 1644. CRM 1642 may be a non-transitory computer readable medium, such as, magnetic media (e.g., a hard disk), optical media, memory devices (e.g., random access memory, flash memory), and the like. In some aspects, the CRI 1644 of computer program 1643 is configured such that when executed by PC 1602, the CRI causes UE 102 to perform steps described herein (e.g., steps described herein with reference to the flow charts). In other aspects, UE 102 may be configured to perform steps described herein without the need for code. That is, for example, PC 1602 may consist merely of one or more ASICs. Hence, the features of the aspects described herein may be implemented in hardware and/or software.

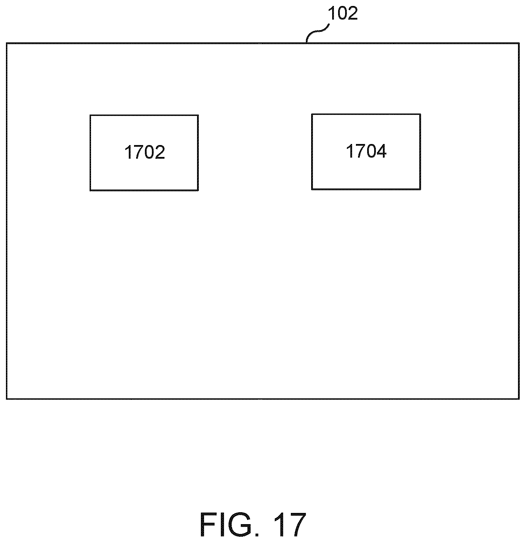

FIG. 17 is a block diagram of a user equipment (UE) 102 according to some aspects. As shown in FIG. 17, in some aspects, the UE 102 may include a selection module (1702) for selecting a physical random access channel (PRACH) configuration from a group including at least a first PRACH configuration associated with a first group and a second PRACH configuration associated with a second group. The first and second PRACH configurations may be different. As shown in FIG. 17, in some aspects, the UE 102 may include a transmission module (1704) transmitting a random access preamble in accordance with the selected PRACH configuration as part of a contention free random access procedure.

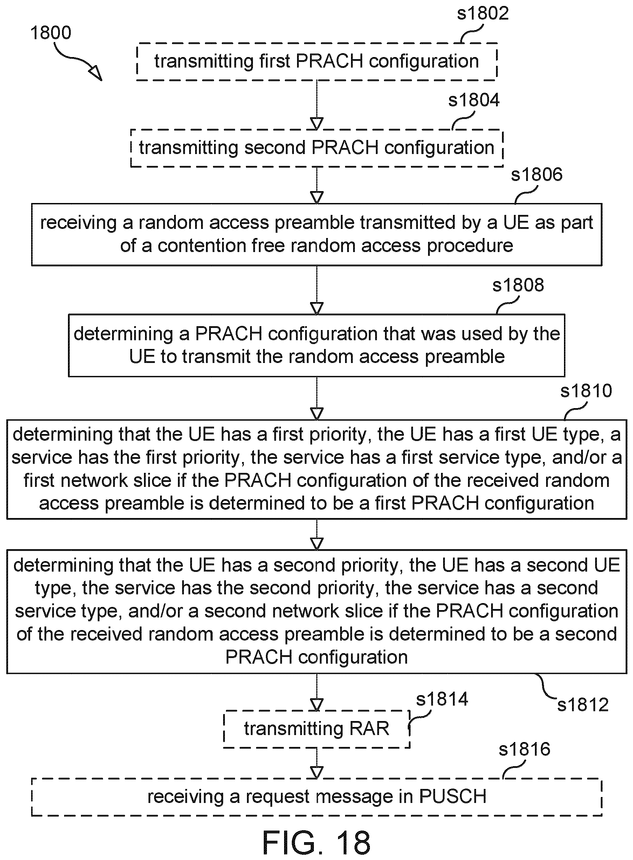

FIG. 18 illustrates a process 1800 performed by a network node 104 according to some aspects. In some aspects, the process 1800 may include optional steps 1802 and 1804 in which the network node 104 transmits first and second physical random access channel (PRACH) configurations, respectively. In some aspects, the first and second PRACH configurations may be transmitted as part of a system information block (e.g., SIB1).

In some aspects, the process 1800 may include a step 1806 in which the network node 104 receives a random access preamble transmitted by a user equipment (UE) 102 as part of a contention free random access procedure. In some aspects (e.g., 2-step random access procedure aspects), in the step 1806, the network node 104 may receive a request message in physical uplink shared channel (PUSCH) with the random access preamble.

In some aspects, the process 1800 may include a step 1808 in which the network node 104 determines a PRACH configuration that was used by the UE 102 to transmit the random access preamble.

In some aspects, the process 1800 may include a step 1810 in which the network node 104 determines that the UE 102 has a first priority, the UE has a first UE type, a service has the first priority, the service has a first service type, and/or a first network slice if the PRACH configuration of the received random access preamble is determined to be a first PRACH configuration.

In some aspects, the process 1800 may include a step 1812 in which the network node 104 determines that the UE 102 has a second priority, the UE has a second UE type, the service has the second priority, the service has a second service type, and/or a second network slice if the PRACH configuration of the received random access preamble is determined to be a second PRACH configuration. In some aspects, the first and second PRACH configurations may be different. In some aspects, the first and second PRACH configurations may be different in at least one of the following parameters: valid PRACH occasions, PRACH configuration periodicities, preamble formats, configured preamble indexes per random access occasion, transmitting power, and power ramping step.

In some aspects, the UE 102 may be attempting to establish a connection with the network node 104 to obtain the service. In some aspects, the service may be an emergency call, a mission critical (MC) service, a multimedia priority service, a mobile broadband (MBB) service, an enhanced mobile broadband (eMBB) service, a vehicle-to-everything (V2X) service, a television broadcast, a small data transmission (SDT) service, or an air-to-ground communication (A2G) service.

In some aspects, the UE 102 may be determined to have the first priority in step 1810 if the PRACH configuration of the received random access preamble is determined to be a first PRACH configuration, the UE 102 may be determined to have the second priority in step 1812 if the PRACH configuration of the received random access preamble is determined to be a second PRACH configuration, and the second priority may be higher than the first priority.

In some aspects, the UE 102 may be determined to have the first UE type in step 1810 if the PRACH configuration of the received random access preamble is determined to be a first PRACH configuration, the UE 102 may be determined to have the second UE type in step 1812 if the PRACH configuration of the received random access preamble is determined to be a second PRACH configuration, and the first and second UE types may be different. In some aspects, the first and second UE types may be subscription types. In some aspects, the second UE type may be a mission critical (MC) UE or a multimedia priority UE. In some aspects, the second UE type may be one of a set of one or more UE types. In some aspects, the set of one or more UE types may include a mission critical (MC) UE and/or a multimedia priority UE. In some aspects, the first UE type may be one of a set of one or more different UE types.

In some aspects, the service may be determined to have the first priority in step 1810 if the PRACH configuration of the received random access preamble may be determined to be a first PRACH configuration, the service may be determined to have the second priority in step 1812 if the PRACH configuration of the received random access preamble is determined to be a second PRACH configuration, and the second priority may be higher than the first priority.

In some aspects, the service may be determined to have the first service type in step 1810 if the PRACH configuration of the received random access preamble is determined to be a first PRACH configuration, the service may be determined to have the second service type in step 1812 if the PRACH configuration of the received random access preamble is determined to be a second PRACH configuration, and the first and second service types may be different. In some aspects, the second service type may be a mission critical (MC) service. In some aspects, the second service type may be one of a set of one or more service types. In some aspects, the set of one or more service types may include a mission critical (MC) service.

In some aspects, the first network slice may be determined in step 1810 if the PRACH configuration of the received random access preamble is determined to be a first PRACH configuration, the second network slice may be determined in step 1812 if the PRACH configuration of the received random access preamble is determined to be a second PRACH configuration, and the first and second network slices may be different. In some aspects, the second network slice may be one of a set of one or more network slices.

In some aspects, the process 1800 may include an optional step 1814 in which the network node 104, in response to receiving the random access preamble, transmits a random access response (RAR). In some aspects (e.g., 2-step random access procedure aspects), the transmitted RAR may include a UE identifier assignment, timing advance information, and a contention resolution message.

In some aspects (e.g., 4-step random access procedure aspects), the process 1800 may include an optional step 1816 in which the network node 104 receives a request message (e.g., for requesting terminal identification and radio resource control (RRC) connection establishment) that was conveyed by the UE 102 in physical uplink shared channel (PUSCH).

In some aspects, the process 1800 may further include transmitting a random access preamble assignment for a contention free random access procedure. In some aspects, the UE 102 may transmit the random access preamble in accordance with the random access preamble assignment.

In some aspects (e.g., 2-step random access procedure aspects), the process 1800 may further include: transmitting a physical uplink shared channel (PUSCH) assignment for the contention free random access procedure. In some aspects (e.g., 2-step random access procedure aspects), the step 1806 may include receiving a request message transmitted by the UE 102 in PUSCH. In some aspects, the request message may be transmitted in PUSCH with the random access preamble. In some aspects, the UE 102 may transmit the request message in accordance with the PUSCH assignment.

In some aspects, the process 1800 may further include determining that the UE 102 has a third priority, the UE 102 has a third UE type, the service has the third priority, the service has a third service type, and/or a third network slice if the PRACH configuration of the received random access preamble is determined to be a third PRACH configuration. In some aspects, the first, second, and third random access preamble configurations may be different, and the third priority may be higher than the first and second priorities. In some aspects, the process 1800 may further include transmitting a system information block including the first, second, and third PRACH configurations.

In some aspects, the first PRACH configuration may include a first list of PRACH occasions, the second PRACH configuration may include a second list of PRACH occasions, and the first and second lists are different. In some aspects, determining the PRACH configuration of the received random access preamble in step 1808 may include determining whether the received random access preamble was transmitted in a PRACH occasion of the first list or a PRACH occasion of the second list. In some aspects, the second list of PRACH occasions may include one or more PRACH occasions masked by a PRACH mask. In some aspects, the first list of PRACH occasions may be associated with a first list of synchronization signals/physical broadcast channel block (SSB) resources, the second list of PRACH occasions may be associated with a second list of SSB resources, and the first and second lists of SSB resources may be different. In some aspects, determining the PRACH configuration of the received random access preamble in step 1808 may include determining whether the received random access preamble was transmitted with one or more SSB resources in the first list of SSB resources or one or more SSB resources in the second list of SSB resources.

In some aspects, the first list of PRACH occasions may be associated with a first list of channel state information-reference signal (CSI-RS) resources, the second list of PRACH occasions may be associated with a second list of CSI-RS resources, and the first and second lists of CSI-RS resources may be different. In some aspects, determining the PRACH configuration of the received random access preamble in step 1808 may include determining whether the received random access preamble was transmitted with one or more CSI-RS resources in the first list of CSI-RS resources or one or more CSI-RS resources in the second list of CSI-RS resources. In some aspects, the first and second lists of PRACH occasions may be defined in an information element (IE) for random access ConfigDedicated information element (IE).

In some aspects, the first PRACH configuration may have a first set of preamble indexes per PRACH occasion, the second PRACH configuration may have a second set of preamble indexes per PRACH occasion, the first and second sets of preamble indexes may not overlap. In some aspects, determining the PRACH configuration of the received random access preamble in step 1808 may include determining whether a preamble index of the received random access preamble is in the first set or the second set. In some aspects, the first set of preamble indexes may be associated with a first list of synchronization signals/physical broadcast channel block (SSB) resources, the second set of preamble indexes may be associated with a second list of SSB resources, and the first and second lists of SSB resources may be different. In some aspects, determining the PRACH configuration of the received random access preamble in step 1808 may include determining whether the received random access preamble was transmitted with one or more SSB resources in the first list of SSB resources or one or more SSB resources in the second list of SSB resources. In some aspects, the first set of preamble indexes may be associated with a first list of channel state information-reference signal (CSI-RS) resources, the second set of preamble indexes may be associated with a second list of CSI-RS resources, and the first and second lists of CSI-RS resources may be different. In some aspects, determining the PRACH configuration of the received random access preamble in step 1808 may include determining whether the received random access preamble was transmitted with one or more CSI-RS resources in the first list of CSI-RS resources or one or more CSI-RS resources in the second list of CSI-RS resources. In some aspects, the first and second sets of preamble indexes may be defined in an information element (IE) for random access ConfigDedicated information element (IE).

In some aspects (e.g., 2-step random access procedure aspects), the first PRACH configuration may include a first physical uplink shared channel (PUSCH) resource configuration, the second PRACH configuration may include a second PUSCH resource configuration, and the first and second PUSCH resource configurations may be different. In some aspects, the step 1806 may further include receiving a request message transmitted by the UE 102 in PUSCH. In some aspects, the request message may be transmitted in PUSCH with the random access preamble. In some aspects, determining the PRACH configuration of the received random access preamble in step 1808 may include determining whether the received request message was transmitted with the first PUSCH resource configuration or the second PUSCH resource configuration. In some aspects, the first and second PUSCH resource configurations may be different with respect to: (i) a demodulation reference signal (DMRS) resource for msgA PUSCH including a DMRS port and/or a DMRS sequence, (ii) a time and/or frequency resource for msgA PUSCH, (iii) power control related parameters for msgA PUSCH including a power ramping step size, a power ramping counter, a power offset relative to the preamble received target power, a power scaling factor for scaling an estimated path loss, and/or a transmit power command (TPC), (iv) a listen before talk (LBT) type of msgA PUSCH, (v) a CP extension of msgA PUSCH, (vi) a frequency hopping configuration of msgA PUSCH, (vii) a waveform of msgA PUSCH, (viii) an interlace configuration of msgA PUSCH, and/or (ix) MCS configuration of msgA PUSCH.

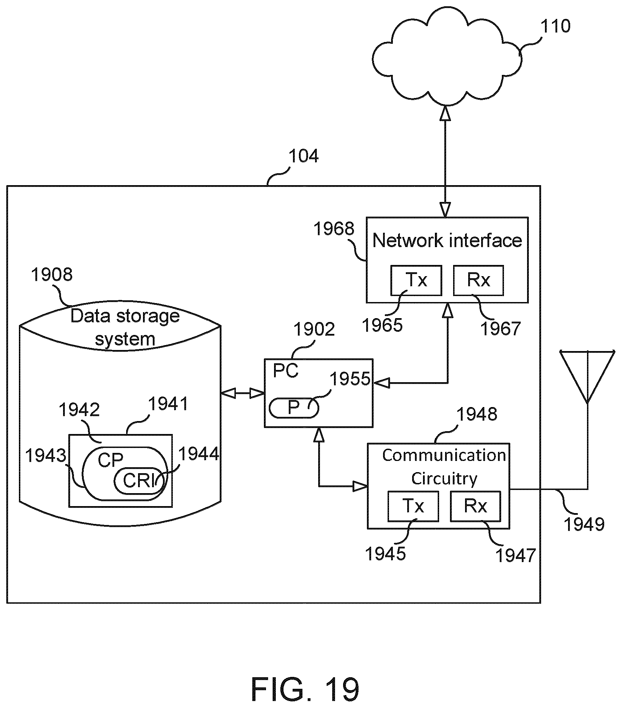

FIG. 19 is a block diagram of a network node 104, according to some aspects. As shown in FIG. 19, the network node 104 may comprise: processing circuitry (PC) 1902, which may include one or more processors (P) 1955 (e.g., one or more general purpose microprocessors and/or one or more other processors, such as an application specific integrated circuit (ASIC), field-programmable gate arrays (FPGAs), and the like), which processors may be co-located in a single housing or in a single data center or may be geographically distributed (i.e., the network node 104 may be a distributed computing apparatus); a network interface 1968 comprising a transmitter (Tx) 1965 and a receiver (Rx) 1967 for enabling the network node 104 to transmit data to and receive data from other nodes connected to a network 110 (e.g., an Internet Protocol (IP) network) to which network interface 1968 is connected; communication circuitry 1948, which is coupled to an antenna arrangement 1949 comprising one or more antennas and which comprises a transmitter (Tx) 1945 and a receiver (Rx) 1947 for enabling the network node 104 to transmit data and receive data (e.g., wirelessly transmit/receive data); and a local storage unit (a.k.a., "data storage system") 1908, which may include one or more non-volatile storage devices and/or one or more volatile storage devices. In aspects where PC 1902 includes a programmable processor, a computer program product (CPP) 1941 may be provided. CPP 1941 includes a computer readable medium (CRM) 1942 storing a computer program (CP) 1943 comprising computer readable instructions (CRI) 1944. CRM 1942 may be a non-transitory computer readable medium, such as, magnetic media (e.g., a hard disk), optical media, memory devices (e.g., random access memory, flash memory), and the like. In some aspects, the CRI 1944 of computer program 1943 is configured such that when executed by PC 1902, the CRI causes the network node 104 to perform steps described herein (e.g., steps described herein with reference to the flow charts). In other aspects, the network node 104 may be configured to perform steps described herein without the need for code. That is, for example, PC 1902 may consist merely of one or more ASICs. Hence, the features of the aspects described herein may be implemented in hardware and/or software.

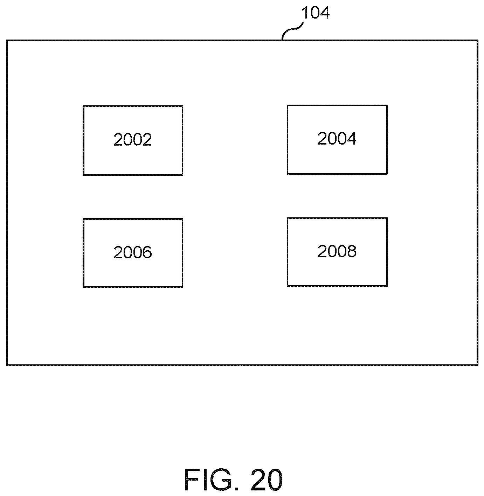

FIG. 20 is a block diagram of a network node 104 according to some aspects. As shown in FIG. 20, in some aspects, the network node 104 may include a receiving module (2002) for receiving a random access preamble transmitted by a user equipment (UE) (102) as part of a contention free random access procedure. In some aspects, the network node 104 may include a first determining module (2004) for determining a physical random access channel (PRACH) configuration that was used by the UE to transmit the random access preamble. In some aspects, the network node 104 may include a second determining module (2006) for determining that the UE has a first priority, the UE has a first UE type, a service has the first priority, the service has a first service type, and/or a first network slice if the PRACH configuration of the received random access preamble is determined to be a first PRACH configuration. In some aspects, the network node 104 may include a third determining module (2008) for determining that the UE has a second priority, the UE has a second UE type, the service has the second priority, the service has a second service type, and/or a second network slice if the PRACH configuration of the received random access preamble is determined to be a second PRACH configuration. In some aspects, the first and second PRACH configurations may be different.

Additionally, while the processes described above and illustrated in the drawings are shown as a sequence of steps, this was done solely for the sake of illustration. Accordingly, it is contemplated that some steps may be added, some steps may be omitted, the order of the steps may be re-arranged, and some steps may be performed in parallel.

## Claims

1. A method (1500) performed by a user equipment, UE, (102), the method comprising:

   selecting (s1506) a physical random access channel, PRACH, configuration from a group including at least a first PRACH configuration associated with a first group and a second PRACH configuration associated with a second group, wherein the first and second PRACH configurations are different,
   wherein the selection is based on a priority of the UE (102) and/or a priority of a service,
   wherein the first PRACH configuration comprises a first list of PRACH occasions, the second PRACH configuration comprises a second list of PRACH occasions, and the first and second lists are different,
   and wherein the first list of PRACH occasions is associated with a first list of synchronization signals/physical broadcast channel block, SSB, resources, the second list of PRACH occasions is associated with a second list of SSB resources, and the first and second lists of SSB resources are different,
   wherein the first group is associated with a first priority, the second group is associated with a second priority, the second priority is higher than the first priority, the first PRACH configuration is selected if the UE and/or the service has the first priority, and the second PRACH configuration is selected if the UE and/or the service has the second priority; and
   transmitting (s1508) a random access preamble in accordance with the selected PRACH configuration as part of a contention free random access procedure.

2. The method of claim 1, wherein the method includes at least one of the following features:

   the random access preamble is transmitted in a PRACH occasion of the first list if the selected PRACH configuration is the first PRACH configuration, and the random access preamble is transmitted in a PRACH occasion of the second list if the selected PRACH configuration is the second PRACH configuration; and
   the second list of PRACH occasions includes one or more PRACH occasions masked by a PRACH mask.

3. The method of claim 2,
   wherein the random access preamble is transmitted with one or more SSB resources in the first list of SSB resources if the selected PRACH configuration is the first PRACH configuration, and the random access preamble is preferably transmitted with one or more SSB resources in the second list of SSB resources if the selected PRACH configuration is the second PRACH configuration.

4. The method of any one of claims 1-3, wherein the first list of PRACH occasions is associated with a first list of channel state information-reference signal, CSI-RS, resources, the second list of PRACH occasions is associated with a second list of CSI-RS resources, and the first and second lists of CSI-RS resources are different;
   wherein the random access preamble is preferably transmitted with one or more CSI-RS resources in the first list of CSI-RS resources if the selected PRACH configuration is the first PRACH configuration, and the random access preamble is preferably transmitted with one or more CSI-RS resources in the second list of CSI-RS resources if the selected PRACH configuration is the second PRACH configuration.

5. The method of any one of claims 1-4, wherein the first PRACH configuration has a first set of preamble indexes per PRACH occasion, the second PRACH configuration has a second set of preamble indexes per PRACH occasion, and the first and second sets of preamble indexes do not overlap;

   wherein the first set of preamble indexes is preferably associated with a first list of synchronization signals/physical broadcast channel block, SSB, resources, the second set of preamble indexes is preferably associated with a second list of SSB resources, and the first and second lists of SSB resources are preferably different; wherein the random access preamble is preferably transmitted with one or more SSB resources in the first list of SSB resources if the selected PRACH configuration is the first PRACH configuration, and the random access preamble is preferably transmitted with one or more SSB resources in the second list of SSB resources if the selected PRACH configuration is the second PRACH configuration.

6. The method of claim 5, wherein the first set of preamble indexes is associated with a first list of channel state information-reference signal, CSI-RS, resources, the second set of preamble indexes is associated with a second list of CSI-RS resources, and the first and second lists of CSI-RS resources are different; wherein the random access preamble is preferably transmitted with one or more CSI-RS resources in the first list of CSI-RS resources if the selected PRACH configuration is the first PRACH configuration, and the random access preamble is preferably transmitted with one or more CSI-RS resources in the second list of CSI-RS resources if the selected PRACH configuration is the second PRACH configuration.

7. The method of any one of claims 1-6, wherein the first PRACH configuration includes a first physical uplink shared channel, PUSCH, resource configuration, the second PRACH configuration includes a second PUSCH resource configuration, and the first and second PUSCH resource configurations are different; wherein the method preferably further comprises transmitting a request message in PUSCH with the random access preamble, the request message is preferably transmitted with the first PUSCH resource configuration if the selected PRACH configuration is the first PRACH configuration, and the request message is preferably transmitted with the second PUSCH resource configuration if the selected PRACH configuration is the second PRACH configuration.

8. The method of any one of claims 1-7, wherein the selection is based on a type of the UE, the second group is associated with a set of one or more UE types, and the second PRACH configuration is selected if the type of the UE is within the set of one or more UE types.

9. The method of any one of claims 1-7, wherein the method is for establishing a connection with a network node (104) to obtain a service, and the selection is based on a priority or a type of the service.

10. The method of any one of claims 1-7, wherein the selection is based on a network slice identification (ID).

11. A user equipment, UE, (102) adapted to:

select a physical random access channel, PRACH, configuration from a group including at least a first PRACH configuration associated with a first group and a second group, wherein the first and second PRACH configurations are different wherein the selection is based on a priority of the UE (102) and/or a priority of a service wherein the first PRACH configuration comprises a first list of PRACH occasions, the second PRACH configuration comprises a second list of PRACH occasions, and the first and second lists are different, and wherein the first list of PRACH occasions is associated with a first list of synchronization signals/physical broadcast channel block, SSB, resources, the second list of PRACH occasions is associated with a second list of SSB resources, and the first and second lists of SSB resources are different, wherein the first group is associated with a first priority, the second group is associated with a second priority, the second priority is higher than the first priority, the first PRACH configuration is selected if the UE and/or the service has the first priority, and the second PRACH configuration is selected if the UE and/or the service has the second priority; and transmit a random access preamble in accordance with the selected PRACH configuration as part of a contention free random access procedure.

12. A method (1800) performed by a network node (104), the method comprising:

receiving (s1806) a random access preamble transmitted by a user equipment, UE, (102) as part of a contention free random access procedure; determining (s1808) a physical random access channel, PRACH, configuration that was used by the UE (102) to transmit the random access preamble; determining (s1810) that the UE (102) has a first priority and/or a service has the first priority if the PRACH configuration of the received random access preamble is determined to be a first PRACH configuration; and determining (s1812) that the UE (102) has a second priority and/or the service has the second priority if the PRACH configuration of the received random access preamble is determined to be a second PRACH configuration,
wherein the first and second PRACH configurations are different,
wherein the first PRACH configuration comprises a first list of PRACH occasions, the second PRACH configuration comprises a second list of PRACH occasions, and the first and second lists are different,
wherein the first list of PRACH occasions is associated with a first list of synchronization signals/physical broadcast channel block, SSB, resources, the second list of PRACH occasions is associated with a second list of SSB resources, and the first and second lists of SSB resources are different,
wherein determining the PRACH configuration of the received random access preamble comprises determining whether the received random access preamble was transmitted with one or more SSB resources in the first list of SSB resources or one or more SSB resources in the second list of SSB resources.

13. The method of claim 12, wherein determining the PRACH configuration of the received random access preamble comprises determining whether the received random access preamble was transmitted in a PRACH occasion of the first list or a PRACH occasion of the second list;
wherein the second list of PRACH occasions preferably includes one or more PRACH occasions masked by a PRACH mask.

14. The method of claim 12 or 13, wherein the first list of PRACH occasions is associated with a first list of channel state information-reference signal, CSI-RS, resources, the second list of PRACH occasions is associated with a second list of CSI-RS resources, and the first and second lists of CSI-RS resources are different;
wherein determining the PRACH configuration of the received random access preamble preferably comprises determining whether the received random access preamble was transmitted with one or more CSI-RS resources in the first list of CSI-RS resources or one or more CSI-RS resources in the second list of CSI-RS resources.

15. The method of any one of claims 12 to 14, wherein the first PRACH configuration has a first set of preamble indexes per PRACH occasion, the second PRACH configuration has a second set of preamble indexes per PRACH occasion, the first and second sets of preamble indexes do not overlap, and determining the PRACH configuration of the received random access preamble comprises determining whether a preamble index of the received random access preamble is in the first set or the second set.

16. The method of claim 15, wherein the first set of preamble indexes is associated with a first list of synchronization signals/physical broadcast channel block, SSB, resources, the second set of preamble indexes is associated with a second list of SSB resources, and the first and second lists of SSB resources are different;
wherein determining the PRACH configuration of the received random access preamble preferably comprises determining whether the received random access preamble was transmitted with one or more SSB resources in the first list of SSB resources or one or more SSB resources in the second list of SSB resources.

17. The method of claim 15 or 16, wherein the first set of preamble indexes is associated with a first list of channel state information-reference signal, CSI-RS, resources, the second set of preamble indexes is associated with a second list of CSI-RS resources, and the first and second lists of CSI-RS resources are different;
wherein determining the PRACH configuration of the received random access preamble preferably comprises determining whether the received random access preamble was transmitted with one or more CSI-RS resources in the first list of CSI-RS resources or one or more CSI-RS resources in the second list of CSI-RS resources.

18. The method of any one of claims 12 to 17, wherein the first PRACH configuration includes a first physical uplink shared channel, PUSCH, resource configuration, the second PRACH configuration includes a second PUSCH resource configuration, and the first and second PUSCH resource configurations are different;
wherein the method preferably further comprises receiving (s1816) a request message transmitted by the UE (102) in PUSCH, the RRC connection establishment request is preferably transmitted in PUSCH with the random access preamble, and determining the PRACH configuration of the received random access preamble preferably comprises determining whether the received request message was transmitted with the first PUSCH resource configuration or the second PUSCH resource configuration.

19. The method of any one of claims 12 to 18, wherein the method comprises at least one of the following features:

the UE (102) is determined to have the first priority if the PRACH configuration of the received random access preamble is determined to be a first PRACH configuration, the UE (102) is determined to have the second priority if the PRACH configuration of the received random access preamble is determined to be a second PRACH configuration, and the second priority is higher than the first priority;

the UE (102) is determined to have the first UE type if the PRACH configuration of the received random access preamble is determined to be a first PRACH configuration, the UE (102) is determined to have the second UE type if the PRACH configuration of the received random access preamble is determined to be a second PRACH configuration, and the first and second UE types are different;

the service is determined to have the first priority or the first service type if the PRACH configuration of the received random access preamble is determined to be a first PRACH configuration, the is determined to have the second priority or the second service type if the PRACH configuration of the received random access preamble is determined to be a second PRACH configuration, and the second priority is higher than the first priority; and

the first network slice is determined if the PRACH configuration of the received random access preamble is determined to be a first PRACH configuration, the second network slice is determined if the PRACH configuration of the received random access preamble is determined to be a second PRACH configuration, and the first and second network slices are different.

20. A network node (104) adapted to:

receive a random access preamble transmitted by a user equipment, UE, (102) as part of a contention free random access procedure;

determine a physical random access channel, PRACH, configuration that was used by the UE (102) to transmit the random access preamble;

determine that the UE (102) has a first priority, and/or a service has the first priority if the PRACH configuration of the received random access preamble is determined to be a first PRACH configuration; and

determine that the UE (102) has a second priority and/or the service has the second priority if the PRACH configuration of the received random access preamble is determined to be a second PRACH configuration,

wherein the first and second PRACH configurations are different,

wherein the first PRACH configuration comprises a first list of PRACH occasions, the second PRACH configuration comprises a second list of PRACH occasions, and the first and second lists are different,

wherein the first list of PRACH occasions is associated with a first list of synchronization signals/physical broadcast channel block, SSB, resources, the second list of PRACH occasions is associated with a second list of SSB resources, and the first and second lists of SSB resources are different,

wherein determining the PRACH configuration of the received random access preamble comprises determining whether the received random access preamble was transmitted with one or more SSB resources in the first list of SSB resources or one or more SSB resources in the second list of SSB resources.

**Patentansprüche**

1. Verfahren (1500), das von einer Benutzereinrichtung, UE, (102) durchgeführt wird, wobei das Verfahren Folgendes umfasst:

Auswählen (s1506) einer Physical Random Access Channel-Konfiguration, PRACH-Konfiguration, aus einer Gruppe, die mindestens eine erste PRACH-Konfiguration, die mit einer ersten Gruppe assoziiert ist, und eine zweite PRACH-Konfiguration umfasst, die mit einer zweiten Gruppe assoziiert ist, wobei die erste und die zweite PRACH-Konfiguration verschieden sind,

wobei die Auswahl auf einer Priorität der UE (102) und/oder einer Priorität eines Dienstes basiert,

wobei die erste PRACH-Konfiguration eine erste Liste von PRACH-Gelegenheiten umfasst, die zweite PRACH-Konfiguration eine zweite Liste von PRACH-Gelegenheiten umfasst und die erste und die zweite Liste verschieden sind, und

wobei die erste Liste von PRACH-Gelegenheiten mit einer ersten Liste von Synchronisationssignalen/Physical Broadcast Channel Block-Ressourcen, SSB-Ressourcen, assoziiert ist, wobei die zweite Liste von PRACH-Gelegenheiten mit einer zweiten Liste von SSB-Ressourcen assoziiert ist und die erste und die zweite Liste von SSB-Ressourcen verschieden sind,

wobei die erste Gruppe mit einer ersten Priorität assoziiert ist, die zweite Gruppe mit einer zweiten Priorität assoziiert ist, die zweite Priorität höher als die erste Priorität ist, die erste PRACH-Konfigurationen ausgewählt wird, falls die UE und/oder der Dienst die erste Priorität aufweisen, und die zweite PRACH-Konfiguration ausgewählt wird, falls die UE und /oder der Dienst die zweite Priorität aufweisen; und

Senden (s1508) einer Direktzugriffspräambel gemäß der ausgewählten PRACH-Konfiguration als Teil einer konfliktfreien Direktzugriffsprozedur.

**2.** Verfahren nach Anspruch 1, wobei das Verfahren mindestens eines der folgenden Merkmale umfasst:

die Direktzugriffspräambel wird bei einer PRACH-Gelegenheit der ersten Liste gesendet, falls die ausgewählte PRACH-Konfiguration die erste PRACH-Konfiguration ist, und die Direktzugriffspräambel wird bei einer PRACH-Gelegenheit der zweiten Liste gesendet, falls die ausgewählte PRACH-Konfiguration die zweite PRACH-Konfiguration ist; und
die zweite Liste von PRACH-Gelegenheiten umfasst eine oder mehrere PRACH-Gelegenheiten, die durch eine PRACH-Maske maskiert sind.

**3.** Verfahren nach Anspruch 2,
wobei die Direktzugriffspräambel mit einer oder mehreren SSB-Ressourcen in der ersten Liste von SSB-Ressourcen gesendet wird, falls die ausgewählte PRACH-Konfiguration die erste PRACH-Konfiguration ist, und die Direktzugriffspräambel vorzugsweise mit einer oder mehreren SSB-Ressourcen in der zweiten Liste von SSB-Ressourcen gesendet wird, falls die ausgewählte PRACH-Konfiguration die zweite PRACH-Konfiguration ist.

**4.** Verfahren nach einem der Ansprüche 1-3, wobei die erste Liste von PRACH-Gelegenheiten mit einer ersten Liste von Kanalzustandsinformations-Referenzsignal-Ressourcen, CSI-RS-Ressourcen, assoziiert ist, die zweite Liste von PRACH-Gelegenheiten mit einer zweiten Liste von CSI-RS-Ressourcen assoziiert ist und die erste und die zweite Liste von CSI-RS-Ressourcen verschieden sind;
wobei die Direktzugriffspräambel vorzugsweise mit einer oder mehreren CSI-RS-Ressourcen in der ersten Liste von CSI-RS-Ressourcen gesendet wird, falls die ausgewählte PRACH-Konfiguration die erste PRACH-Konfiguration ist, und die Direktzugriffspräambel vorzugsweise mit einer oder mehreren CSI-RS-Ressourcen in der zweiten Liste von CSI-RS-Ressourcen gesendet wird, falls die ausgewählte PRACH-Konfiguration die zweite PRACH-Konfiguration ist.

**5.** Verfahren nach einem der Ansprüche 1-4, wobei die erste PRACH-Konfiguration einen ersten Satz von Präambelindizes pro PRACH-Gelegenheit aufweist, die zweite einen zweiten Satz von Präambelindizes pro PRACH-Gelegenheit aufweist und der erste und der zweiten Satz von Präambelindizes einander nicht überlappen;

wobei der erste Satz von Präambelindizes vorzugsweise mit einer ersten Liste von Synchronisationssignalen/-Physical Broadcast Channel Block-Ressourcen, SSB-Ressourcen, assoziiert ist, der zweite Satz von Präambelindizes vorzugsweise mit einer zweiten Liste von SSB-Ressourcen assoziiert ist und die erste und die zweite Liste von SSB-Ressourcen vorzugsweise verschieden sind;
wobei die Direktzugriffspräambel vorzugsweise mit einer oder mehreren SSB-Ressourcen in der ersten Liste von SSB-Ressourcen gesendet wird, falls die ausgewählte PRACH-Konfiguration die erste PRACH-Konfiguration ist, und die Direktzugriffspräambel vorzugsweise mit einer oder mehreren SSB-Ressourcen in der zweiten Liste gesendet wird, falls die ausgewählte PRACH-Konfiguration die zweite PRACH-Konfiguration ist.

**6.** Verfahren nach Anspruch 5, wobei der erste Satz von Präambelindizes mit einer ersten Liste von Kanalzustandsinformations-Referenzsignal-Ressourcen, CSI-RS-Ressourcen, assoziiert ist, der zweite Satz von Präambelindizes mit einer zweiten Liste von CSI-RS-Ressourcen assoziiert ist und die erste und die zweite Liste von CSI-RS-Ressourcen verschieden sind;
wobei die Direktzugriffspräambel vorzugsweise mit einer oder mehreren CSI-RS-Ressourcen in der ersten Liste von CSI-RS-Ressourcen gesendet wird, falls die ausgewählte PRACH-Konfiguration die erste PRACH-Konfiguration ist, und die Direktzugriffspräambel vorzugsweise mit einer oder mehreren CSI-RS-Ressourcen in der zweiten Liste von CSI-RS-Ressourcen gesendet wird, falls die ausgewählte PRACH-Konfiguration die zweite PRACH-Konfiguration ist.

**7.** Verfahren nach einem der Ansprüche 1-6, wobei die erste PRACH-Konfiguration eine erste Physical Uplink Shared Channel-Ressourcenkonfiguration, PUSCH-Ressourcenkonfiguration, umfasst, die zweite PRACH-Konfiguration eine zweite PUSCH-Ressourcenkonfiguration umfasst und die erste und die zweite PUSCH-Konfiguration verschieden sind;
wobei das Verfahren ferner Senden einer Anforderungsnachricht in PUSCH mit der Direktzugriffspräambel umfasst, die Anforderungsnachricht vorzugsweise mit der ersten PUSCH-Ressourcenkonfiguration gesendet wird, falls die ausgewählte PRACH-Konfiguration die erste PRACH-Konfiguration ist, und die Anforderungsnachricht vorzugsweise mit der zweiten PUSCH-Ressourcenkonfiguration gesendet wird, falls die ausgewählte PRACH-Konfiguration die zweite PRACH-Konfiguration ist.

8. Verfahren nach einem der Ansprüche 1-7, wobei die Auswahl auf einem Typ der UE basiert, die zweite Gruppe mit einem Satz eines oder mehrerer UE-Typen assoziiert ist und die zweite PRACH-Konfiguration ausgewählt wird, falls sich der Typ der UE in dem Satz eines oder mehrerer UE-Typen befindet.

9. Verfahren nach einem der Ansprüche 1-7, wobei das Verfahren zur Herstellung einer Verbindung mit einem Netzwerkknoten (104) dient, um einen Dienst zu erhalten, und die Auswahl auf einer Priorität oder einem Typ des Diensts basiert.

10. Verfahren nach einem der Ansprüche 1-7, wobei die Auswahl auf einer Netzwerk-Slice-Identifikation (Netzwerk-Slice-ID) basiert.

11. Benutzereinrichtung, UE, (102), die zu Folgendem ausgelegt ist:

Auswählen einer Physical Random Access Channel-Konfiguration, PRACH-Konfiguration, aus einer Gruppe, die mindestens eine erste PRACH-Konfiguration umfasst, die mit einer ersten Gruppe und einer zweiten Gruppe assoziiert ist, wobei die erste und die zweite PRACH-Konfiguration verschieden sind,
wobei die Auswahl auf einer Priorität der UE (102) und/oder einer Priorität eines Dienstes basiert,
wobei die erste PRACH-Konfiguration eine erste Liste von PRACH-Gelegenheiten umfasst, die zweite PRACH-Konfiguration eine zweite Liste von PRACH-Gelegenheiten umfasst und die erste und die zweite Liste verschieden sind, und wobei die erste Liste von PRACH-Gelegenheiten mit einer ersten Liste von Synchronisationssignalen/Physical Broadcast Channel Block-Ressourcen, SSB-Ressourcen, assoziiert ist, wobei die zweite Liste von PRACH-Gelegenheiten mit einer zweiten Liste von SSB-Ressourcen assoziiert ist und die erste und die zweite Liste von SSB-Ressourcen verschieden sind, wobei die erste Gruppe mit einer ersten Priorität assoziiert ist, die zweite Gruppe mit einer zweiten Priorität assoziiert ist, die zweite Priorität höher als die erste Priorität ist, die erste PRACH-Konfigurationen ausgewählt wird, falls die UE und/oder der Dienst die erste Priorität aufweisen, und die zweite PRACH-Konfiguration ausgewählt wird, falls die UE und /oder der Dienst die zweite Priorität aufweisen; und
Senden einer Direktzugriffspräambel gemäß der ausgewählten PRACH-Konfiguration als Teil einer konfliktfreien Direktzugriffsprozedur.

12. Verfahren (1800), das von einem Netzwerkknoten (104) durchgeführt wird, wobei das Verfahren Folgendes umfasst:

Empfangen (s1806) einer Direktzugriffspräambel, die von einer Benutzereinrichtung, UE, (102) als Teil einer konfliktfreien Direktzugriffsprozedur gesendet wird;
Bestimmen (s1808) einer Physical Random Access Channel-Konfiguration, PRACH-Konfiguration, die von der UE (102) zum Senden der Direktzugriffspräambel verwendet wurde;
Bestimmen (s1810), dass die UE (102) eine erste Priorität aufweist und/oder ein Dienst die erste Priorität aufweist, falls bestimmt wird, dass die PRACH-Konfiguration der empfangenen Direktzugriffspräambel eine erste PRACH-Konfiguration ist; und
Bestimmen (s1812), dass die UE (102) eine zweite Priorität aufweist und/oder der Dienst die zweite Priorität aufweist, falls bestimmt wird, dass die PRACH-Konfiguration der empfangenen Direktzugriffspräambel eine zweite PRACH-Konfiguration ist,
wobei die erste und die zweite PRACH-Konfiguration verschieden sind,
wobei die erste PRACH-Konfiguration eine erste Liste von PRACH-Gelegenheiten umfasst, die zweite PRACH-Konfiguration eine zweite Liste von PRACH-Gelegenheiten umfasst und die erste und die zweite Liste verschieden sind,
wobei die erste Liste von PRACH-Gelegenheiten mit einer ersten Liste von Synchronisationssignalen/Physical Broadcast Channel Block-Ressourcen, SSB-Ressourcen, assoziiert ist, wobei die zweite Liste von PRACH-Gelegenheiten mit einer zweiten Liste von SSB-Ressourcen assoziiert ist und die erste und die zweite Liste von SSB-Ressourcen verschieden sind,
wobei das Bestimmen der PRACH-Konfiguration der empfangenen Direktzugriffspräambel Bestimmen umfasst, ob die empfangene Direktzugriffspräambel mit einer oder mehreren SSB-Ressourcen in der ersten Liste von SSB-Ressourcen oder einer oder mehreren SSB-Ressourcen in der zweiten Liste von SSB-Ressourcen gesendet wurde.

13. Verfahren nach Anspruch 12, wobei

das Bestimmen der PRACH-Konfiguration der empfangenen Direktzugriffspräambel Bestimmen umfasst, ob die empfangene Direktzugriffspräambel bei einer PRACH-Gelegenheit der ersten Liste oder einer PRACH-Gelegenheit der zweiten Liste gesendet wurde;

wobei die zweite Liste von PRACH-Gelegenheiten vorzugsweise eine oder mehrere PRACH-Gelegenheiten umfasst, die durch eine PRACH-Maske maskiert sind.

14. Verfahren nach Anspruch 12 oder 13,

wobei die erste Liste von PRACH-Gelegenheiten mit einer ersten Liste von Kanalzustandsinformations-Referenzsignal-Ressourcen, CSI-RS-Ressourcen, assoziiert ist, die zweite Liste von PRACH-Gelegenheiten mit einer zweiten Liste von CSI-RS-Ressourcen assoziiert ist und die erste und die zweite Liste von CSI-RS-Ressourcen verschieden sind;

wobei das Bestimmen der PRACH-Konfiguration der empfangenen Direktzugriffspräambel vorzugsweise Bestimmen umfasst, ob die empfangene Direktzugriffspräambel mit einer oder mehreren CSI-RS-Ressourcen in der ersten Liste von CSI-RS-Ressourcen oder einer oder mehreren CSI-RS-Ressourcen in der zweiten Liste von CSI-RS-Ressourcen gesendet wurde.

15. Verfahren nach einem der Ansprüche 12 bis 14, wobei die erste PRACH-Konfiguration einen ersten Satz von Präambelindizes pro PRACH-Gelegenheit aufweist, die zweite einen zweiten Satz von Präambelindizes pro PRACH-Gelegenheit aufweist und der erste und der zweiten Satz von Präambelindizes einander nicht überlappen, und das Bestimmen der PRACH-Konfiguration der empfangenen Direktzugriffspräambel Bestimmen umfasst, ob sich ein Präambelindex der empfangenen Direktzugriffspräambel in dem ersten Satz oder in dem zweiten Satz befindet.

16. Verfahren nach Anspruch 15, wobei der erste Satz von Präambelindizes mit einer ersten Liste von Synchronisationssignalen/Physical Broadcast Channel Block-Ressourcen, SSB-Ressourcen, assoziiert ist, der zweite Satz von Präambelindizes mit einer zweiten Liste von SSB-Ressourcen assoziiert ist und die erste und die zweite Liste von SSB-Ressourcen verschieden sind;

wobei das Bestimmen der PRACH-Konfiguration der empfangenen Direktzugriffspräambel vorzugsweise Bestimmen umfasst, ob die empfangene Direktzugriffspräambel mit einer oder mehreren SSB-Ressourcen in der ersten Liste von SSB-Ressourcen oder einer oder mehreren SSB-Ressourcen in der zweiten Liste von SSB-Ressourcen gesendet wurde.

17. Verfahren nach Anspruch 15 oder 16,

wobei der erste Satz von Präambelindizes mit einer ersten Liste von Kanalzustandsinformations-Referenzsignal-Ressourcen, CSI-RS-Ressourcen, assoziiert ist, der zweite Satz von Präambelindizes mit einer zweiten Liste von CSI-RS-Ressourcen assoziiert ist und die erste und die zweite Liste von CSI-RS-Ressourcen verschieden sind;

wobei das Bestimmen der PRACH-Konfiguration der empfangenen Direktzugriffspräambel vorzugsweise Bestimmen umfasst, ob die empfangene Direktzugriffspräambel mit einer oder mehreren CSI-RS-Ressourcen in der ersten Liste von CSI-RS-Ressourcen oder einer oder mehreren CSI-RS-Ressourcen in der zweiten Liste von CSI-RS-Ressourcen gesendet wurde.

18. Verfahren nach einem der Ansprüche 12 bis 17,

wobei die erste PRACH-Konfiguration eine erste Physical Uplink Shared Channel-Ressourcenkonfiguration, PUSCH-Ressourcenkonfiguration, umfasst, die zweite PRACH-Konfiguration eine zweite PUSCH-Ressourcenkonfiguration umfasst und die erste und die zweite PUSCH-Konfiguration verschieden sind;

wobei das Verfahren vorzugsweise ferner Empfangen (s1816) einer Anforderungsnachricht umfasst, die von der UE (102) in PUSCH gesendet wird, die RRC-Verbindungsherstellungsanforderung vorzugsweise in PUSCH mit der Direktzugriffspräambel gesendet wird und das Bestimmen der PRACH-Konfiguration der empfangenen Direktzugriffspräambel vorzugsweise Bestimmen umfasst, ob die empfangene Anforderungsnachricht mit der ersten PUSCH-Ressourcenkonfiguration oder der zweiten PUSCH-Ressourcenkonfiguration gesendet wurde.

19. Verfahren nach einem der Ansprüche 12 bis 18, wobei das Verfahren mindestens eines der folgenden Merkmale umfasst:

es wird bestimmt, dass die UE (102) die erste Priorität aufweist, falls bestimmt wird, dass die PRACH-Konfiguration der empfangenen Direktzugriffspräambel eine erste PRACH-Konfiguration ist, es wird bestimmt, dass die UE (102) die zweite Priorität aufweist, falls bestimmt wird, dass die PRACH-Konfiguration der empfangenen Direktzugriffspräambel eine zweite PRACH-Konfiguration ist, und die zweite Priorität ist höher als die erste Priorität;

es wird bestimmt, dass die UE (102) vom ersten UE-Typ ist, falls bestimmt wird, dass die PRACH-Konfiguration der empfangenen Direktzugriffspräambel eine erste PRACH-Konfiguration ist, es wird bestimmt, dass die UE (102) vom zweiten UE-Typ ist, falls bestimmt wird, dass die PRACH-Konfiguration der empfangenen Direktzugriffspräambel eine zweite PRACH-Konfiguration ist, und der erste und der zweite UE-Typ sind verschieden;

es wird bestimmt, dass der Dienst die erste Priorität aufweist oder vom ersten Diensttyp ist, falls bestimmt wird, dass die PRACH-Konfiguration der empfangenen Direktzugriffspräambel eine erste PRACH-Konfiguration ist, es wird bestimmt, dass der Dienst die zweite Priorität aufweist oder vom zweiten Diensttyps ist, falls bestimmt wird, dass die PRACH-Konfiguration der empfangenen Direktzugriffspräambel eine zweite PRACH-Konfiguration ist, und die zweite Priorität ist höher als die erste Priorität; und

der erste Netzwerk-Slice wird bestimmt, falls bestimmt wird, dass die PRACH-Konfiguration der empfangenen Direktzugriffspräambel eine erste PRACH-Konfiguration ist, der zweite Netzwerk-Slice wird bestimmt, falls bestimmt wird, dass die PRACH-Konfiguration der empfangenen Direktzugriffspräambel eine zweite PRACH-Konfiguration ist, und der erste und der zweite Netzwerk-Slice sind verschieden.

20. Netzwerkknoten (104), der zu Folgendem ausgelegt ist:

Empfangen einer Direktzugriffspräambel, die von einer Benutzereinrichtung, UE, (102) als Teil einer konfliktfreien Direktzugriffsprozedur gesendet wird;

Bestimmen einer Physical Random Access Channel-Konfiguration, PRACH-Konfiguration, die von der UE (102) zum Senden der Direktzugriffspräambel verwendet wurde;

Bestimmen, dass die UE (102) eine erste Priorität aufweist und/oder ein Dienst die erste Priorität aufweist, falls bestimmt wird, dass die PRACH-Konfiguration der empfangenen Direktzugriffspräambel eine erste PRACH-Konfiguration ist; und

Bestimmen, dass die UE (102) eine zweite Priorität aufweist und/oder der Dienst die zweite Priorität aufweist, falls bestimmt wird, dass die PRACH-Konfiguration der empfangenen Direktzugriffspräambel eine zweite PRACH-Konfiguration ist,

wobei die erste und die zweite PRACH-Konfiguration verschieden sind,

wobei die erste PRACH-Konfiguration eine erste Liste von PRACH-Gelegenheiten umfasst, die zweite PRACH-Konfiguration eine zweite Liste von PRACH-Gelegenheiten umfasst und die erste und die zweite Liste verschieden sind,

wobei die erste Liste von PRACH-Gelegenheiten mit einer ersten Liste von Synchronisationssignalen/Physical Broadcast Channel Block-Ressourcen, SSB-Ressourcen, assoziiert ist, wobei die zweite Liste von PRACH-Gelegenheiten mit einer zweiten Liste von SSB-Ressourcen assoziiert ist und die erste und die zweite Liste von SSB-Ressourcen verschieden sind,

wobei das Bestimmen der PRACH-Konfiguration der empfangenen Direktzugriffspräambel Bestimmen umfasst, ob die empfangene Direktzugriffspräambel mit einer oder mehreren SSB-Ressourcen in der ersten Liste von SSB-Ressourcen oder einer oder mehreren SSB-Ressourcen in der zweiten Liste von SSB-Ressourcen gesendet wurde.

## Revendications

1. Procédé (1500) réalisé par un équipement utilisateur, UE, (102), le procédé comprenant :

la sélection (s1506) d'une configuration de canal d'accès aléatoire physique, PRACH, à partir d'un groupe incluant au moins une première configuration PRACH associée à un premier groupe et une deuxième configuration PRACH associée à un deuxième groupe, dans lequel les première et deuxième configurations PRACH sont différentes,

dans lequel la sélection est basée sur une priorité de l'UE (102) et/ou une priorité d'un service,

dans lequel la première configuration PRACH comprend une première liste d'occasions PRACH, la deuxième configuration PRACH comprend une deuxième liste d'occasions PRACH, et les première et deuxième listes sont différentes, et dans lequel la première liste d'occasions PRACH est associée à une première liste de ressources de signaux de synchronisation/bloc de canal de diffusion physique, SSB, la deuxième liste d'occasions PRACH est associée à une deuxième liste de ressources SSB, et les première et deuxième listes de ressources SSB sont différentes,

dans lequel le premier groupe est associé à une première priorité, le deuxième groupe est associé à une deuxième priorité, la deuxième priorité est plus grande que la première priorité, la première configuration PRACH est sélectionnée si l'UE et/ou le service présentent la première priorité, et la deuxième configuration PRACH est sélectionnée si l'UE et/ou le service présentent la deuxième priorité ; et

la transmission (s1508) d'un préambule d'accès aléatoire conformément à la configuration PRACH sélectionnée dans le cadre d'une procédure d'accès aléatoire sans conflit.

2. Procédé selon la revendication 1, dans lequel le procédé inclut au moins l'une des caractéristiques suivantes :

le préambule d'accès aléatoire est transmis dans une occasion PRACH de la première liste si la configuration PRACH sélectionnée est la première configuration PRACH, et le préambule d'accès aléatoire est transmis dans une occasion PRACH de la deuxième liste si la configuration PRACH sélectionnée est la deuxième configuration PRACH ; et

la deuxième liste d'occasions PRACH inclut une ou plusieurs occasions PRACH masquées par un masque PRACH.

3. Procédé selon la revendication 2,

dans lequel le préambule d'accès aléatoire est transmis avec une ou plusieurs ressources SSB dans la première liste de ressources SSB si la configuration PRACH sélectionnée est la première configuration PRACH, et le préambule d'accès aléatoire est transmis de préférence avec une ou plusieurs ressources SSB dans la deuxième liste de ressources SSB si la configuration PRACH sélectionnée est la deuxième configuration PRACH.

4. Procédé selon l'une quelconque des revendications 1 à 3, dans lequel la première liste d'occasions PRACH est associée à une première liste de ressources de signal de référence d'informations d'état de canal, CSI-RS, la deuxième liste d'occasions PRACH est associée à une deuxième liste de ressources CSI-RS, et les première et deuxième listes de ressources CSI-RS sont différentes ;

dans lequel le préambule d'accès aléatoire est de préférence transmis avec une ou plusieurs ressources CSI-RS dans la première liste de ressources CSI-RS si la configuration PRACH sélectionnée est la première configuration PRACH, et le préambule d'accès aléatoire est de préférence transmis avec une ou plusieurs ressources CSI-RS dans la deuxième liste de ressources CSI-RS si la configuration PRACH sélectionnée est la deuxième configuration PRACH.

5. Procédé selon l'une quelconque des revendications 1 à 4, dans lequel la première configuration PRACH présente un premier ensemble d'indices de préambule par occasion PRACH, la deuxième configuration PRACH présente un deuxième ensemble d'indices de préambule par occasion PRACH, et les premier et deuxième ensembles d'indices de préambule ne se chevauchent pas ;

dans lequel le premier ensemble d'indices de préambule est de préférence associé à une première liste de ressources de signaux de synchronisation/bloc de canal de diffusion physique, SSB, le deuxième ensemble d'indices de préambule est de préférence associé à une deuxième liste de ressources SSB, et les première et deuxième listes de ressources SSB sont de préférence différentes ;

dans lequel le préambule d'accès aléatoire est de préférence transmis avec une ou plusieurs ressources SSB dans la première liste de ressources SSB si la configuration PRACH sélectionnée est la première configuration PRACH, et le préambule d'accès aléatoire est de préférence transmis avec une ou plusieurs ressources SSB dans la deuxième liste de ressources SSB si la configuration PRACH sélectionnée est la deuxième configuration PRACH.

6. Procédé selon la revendication 5, dans lequel le premier ensemble d'indices de préambule est associé à une première liste de ressources de signal de référence d'informations d'état de canal, CSI-RS, le deuxième ensemble d'indices de préambule est associé à une deuxième liste de ressources CSI-RS, et les première et deuxième listes de ressources CSI-RS sont différentes ;

dans lequel le préambule d'accès aléatoire est de préférence transmis avec une ou plusieurs ressources CSI-RS dans la première liste de ressources CSI-RS si la configuration PRACH sélectionnée est la première configuration PRACH, et le préambule d'accès aléatoire est de préférence transmis avec une ou plusieurs ressources CSI-RS dans la deuxième liste de ressources CSI-RS si la configuration PRACH sélectionnée est la deuxième configuration PRACH.

**7.** Procédé selon l'une quelconque des revendications 1 à 6, dans lequel la première configuration PRACH inclut une première configuration de ressources de canal partagé de liaison montante physique, PUSCH, la deuxième configuration PRACH inclut une deuxième configuration de ressources PUSCH, et les première et deuxième configurations de ressources PUSCH sont différentes ;

dans lequel le procédé comprend en outre de préférence la transmission d'un message de demande dans PUSCH avec le préambule d'accès aléatoire, le message de demande est de préférence transmis avec la première configuration de ressources PUSCH si la configuration PRACH sélectionnée est la première configuration PRACH, et le message de demande est de préférence transmis avec la deuxième configuration de ressources PUSCH si la configuration PRACH sélectionnée est la deuxième configuration PRACH.

**8.** Procédé selon l'une quelconque des revendications 1 à 7, dans lequel la sélection est basée sur un type de l'UE, le deuxième groupe est associé à un ensemble d'un ou plusieurs types d'UE, et la deuxième configuration PRACH est sélectionnée si le type de l'UE est dans l'ensemble d'un ou plusieurs types d'UE.

**9.** Procédé selon l'une quelconque des revendications 1 à 7, dans lequel le procédé est destiné à établir une connexion avec un nœud de réseau (104) pour obtenir un service, et la sélection est basée sur une priorité ou un type du service.

**10.** Procédé selon l'une quelconque des revendications 1 à 7, dans lequel la sélection est basée sur une identification (ID) de tranche de réseau.

**11.** Equipement utilisateur, UE, (102), adapté pour :

sélectionner une configuration de canal d'accès aléatoire physique, PRACH, à partir d'un groupe incluant au moins une première configuration PRACH associée à un premier groupe et une deuxième configuration PRACH associée à un deuxième groupe, dans lequel les première et deuxième configurations PRACH sont différentes, dans lequel la sélection est basée sur une priorité de l'UE (102) et/ou une priorité d'un service, dans lequel la première configuration PRACH comprend une première liste d'occasions PRACH, la deuxième configuration PRACH comprend une deuxième liste d'occasions PRACH, et les première et deuxième listes sont différentes, et dans lequel la première liste d'occasions PRACH est associée à une première liste de ressources de signaux de synchronisation/bloc de canal de diffusion physique, SSB, la deuxième liste d'occasions PRACH est associée à une deuxième liste de ressources SSB, et les première et deuxième listes de ressources SSB sont différentes,

dans lequel le premier groupe est associé à une première priorité, le deuxième groupe est associé à une deuxième priorité, la deuxième priorité est plus grande que la première priorité, la première configuration PRACH est sélectionnée si l'UE et/ou le service présentent la première priorité, et la deuxième configuration PRACH est sélectionnée si l'UE et/ou le service présentent la deuxième priorité ; et

transmettre un préambule d'accès aléatoire conformément à la configuration PRACH sélectionnée dans le cadre d'une procédure d'accès aléatoire sans conflit.

**12.** Procédé (1800) réalisé par un nœud de réseau (104), le procédé comprenant :

la réception (s1806) d'un préambule d'accès aléatoire transmis par un équipement utilisateur, UE, (102) dans le cadre d'une procédure d'accès aléatoire sans conflit ;

la détermination (s1808) d'une configuration de canal d'accès aléatoire physique, PRACH, qui a été utilisée par l'UE (102) pour transmettre le préambule d'accès aléatoire ;

la détermination (s1810) que l'UE (102) présente une première priorité et/ou qu'un service présente la première priorité si la configuration PRACH du préambule d'accès aléatoire reçu est déterminée comme étant une première configuration PRACH ; et

la détermination (s1812) que l'UE (102) présente une deuxième priorité et/ou que le service présente la deuxième priorité si la configuration PRACH du préambule d'accès aléatoire reçu est déterminée comme étant une deuxième configuration PRACH,

dans lequel les première et deuxième configurations PRACH sont différentes,

dans lequel la première configuration PRACH comprend une première liste d'occasions PRACH, la deuxième configuration PRACH comprend une deuxième liste d'occasions PRACH, et les première et deuxième listes sont différentes,

dans lequel la première liste d'occasions PRACH est associée à une première liste de ressources de signaux de synchronisation/bloc de canal de diffusion physique, SSB, la deuxième liste d'occasions PRACH est associée à une deuxième liste de ressources SSB, et les première et deuxième listes de ressources SSB sont différentes, dans lequel la détermination de la configuration PRACH du préambule d'accès aléatoire reçu comprend la détermination si le préambule d'accès aléatoire reçu a été transmis avec une ou plusieurs ressources SSB dans la première liste de ressources SSB ou une ou plusieurs ressources SSB dans la deuxième liste de ressources SSB.

13. Procédé selon la revendication 12, dans lequel

la détermination de la configuration PRACH du préambule d'accès aléatoire reçu comprend la détermination si le préambule d'accès aléatoire reçu a été transmis dans une occasion PRACH de la première liste ou dans une occasion PRACH de la deuxième liste ;
dans lequel la deuxième liste d'occasions PRACH inclut de préférence une ou plusieurs occasions PRACH masquées par un masque PRACH.

14. Procédé selon la revendication 12 ou 13, dans lequel la première liste d'occasions PRACH est associée à une première liste de ressources de signal de référence d'informations d'état de canal, CSI-RS, la deuxième liste d'occasions PRACH est associée à une deuxième liste de ressources CSI-RS, et les première et deuxième listes de ressources CSI-RS sont différentes ;
dans lequel la détermination de la configuration PRACH du préambule d'accès aléatoire reçu comprend de préférence la détermination si le préambule d'accès aléatoire reçu a été transmis avec une ou plusieurs ressources CSI-RS dans la première liste de ressources CSI-RS ou avec une ou plusieurs ressources CSI-RS dans la deuxième liste de ressources CSI-RS.

15. Procédé selon l'une quelconque des revendications 12 à 14, dans lequel la première configuration PRACH présente un premier ensemble d'indices de préambule par occasion PRACH, la deuxième configuration PRACH présente un deuxième ensemble d'indices de préambule par occasion PRACH, les premier et deuxième ensembles d'indices de préambule ne se chevauchent pas, et la détermination de la configuration PRACH du préambule d'accès aléatoire reçu comprend la détermination si un indice de préambule du préambule d'accès aléatoire reçu est dans le premier ensemble ou dans le deuxième ensemble.

16. Procédé selon la revendication 15, dans lequel le premier ensemble d'indices de préambule est associé à une première liste de ressources de signaux de synchronisation/bloc de canal de diffusion physique, SSB, le deuxième ensemble d'indices de préambule est associé à une deuxième liste de ressources SSB, et les première et deuxième listes de ressources SSB sont de préférence différentes ;
dans lequel la détermination de la configuration PRACH du préambule d'accès aléatoire reçu comprend de préférence la détermination si le préambule d'accès aléatoire a été transmis avec une ou plusieurs ressources SSB dans la première liste de ressources SSB ou avec une ou plusieurs ressources SSB dans la deuxième liste de ressources SSB.

17. Procédé selon la revendication 15 ou 16, dans lequel le premier ensemble d'indices de préambule est associé à une première liste de ressources de signal de référence d'informations d'état de canal, CSI-RS, le deuxième ensemble d'indices de préambule est associé à une deuxième liste de ressources CSI-RS, et les première et deuxième listes de ressources CSI-RS sont différentes ;
dans lequel la détermination de la configuration PRACH du préambule d'accès aléatoire reçu comprend de préférence la détermination si le préambule d'accès aléatoire a été transmis avec une ou plusieurs ressources CSI-RS dans la première liste de ressources CSI-RS ou avec une ou plusieurs ressources CSI-RS dans la deuxième liste de ressources CSI-RS.

18. Procédé selon l'une quelconque des revendications 12 à 17, dans lequel la première configuration PRACH inclut une première configuration de ressources de canal partagé de liaison montante physique, PUSCH, la deuxième configuration PRACH inclut une deuxième configuration de ressources PUSCH, et les première et deuxième configurations de ressources PUSCH sont différentes ;
dans lequel le procédé comprend en outre de préférence la réception (s1816) d'un message de demande transmis par l'UE (102) dans PUSCH, la demande d'établissement de connexion RRC est de préférence transmise dans PUSCH avec le préambule d'accès aléatoire, et la détermination de la configuration PRACH du préambule d'accès aléatoire reçu comprend de préférence la détermination si le message de demande reçu a été transmis avec la première configuration de ressources PUSCH ou avec la deuxième configuration de ressources PUSCH.

19. Procédé selon l'une quelconque des revendications 12 à 18, dans lequel le procédé comprend au moins l'une des caractéristiques suivantes :

l'UE (102) est déterminé comme présentant la première priorité si la configuration PRACH du préambule d'accès aléatoire reçu est déterminée comme étant une première configuration PRACH, l'UE (102) est déterminé comme présentant la deuxième priorité si la configuration PRACH du préambule d'accès aléatoire reçu est déterminée comme étant une deuxième configuration PRACH, et la deuxième priorité est plus grande que la première priorité ;

l'UE (102) est déterminé comme présentant le premier type d'UE si la configuration PRACH du préambule d'accès aléatoire reçu est déterminée comme étant une première configuration PRACH, l'UE (102) est déterminé comme présentant le deuxième type d'UE si la configuration PRACH du préambule d'accès aléatoire reçu est déterminée comme étant une deuxième configuration PRACH, et les premier et deuxième types d'UE sont différents ;

le service est déterminé comme présentant la première priorité ou le premier type de service si la configuration PRACH du préambule d'accès aléatoire reçu est déterminée comme étant une première configuration PRACH, le service est déterminé comme présentant la deuxième priorité ou le deuxième type de service si la configuration PRACH du préambule d'accès aléatoire reçu est déterminée comme étant une deuxième configuration PRACH, et la deuxième priorité est plus grande que la première priorité ; et

la première tranche de réseau est déterminée si la configuration PRACH du préambule d'accès aléatoire reçu est déterminée comme étant une première configuration PRACH, la deuxième tranche de réseau est déterminée si la configuration PRACH du préambule d'accès aléatoire reçu est déterminée comme étant une deuxième configuration PRACH, et les première et deuxième tranches de réseau sont différentes.

20. Nœud de réseau (104) adapté pour :

recevoir un préambule d'accès aléatoire transmis par un équipement utilisateur, UE, (102) dans le cadre d'une procédure d'accès aléatoire sans conflit ;

déterminer une configuration de canal d'accès aléatoire physique, PRACH, qui a été utilisée par l'UE (102) pour transmettre le préambule d'accès aléatoire ;

déterminer que l'UE (102) présente une première priorité et/ou qu'un service présente la première priorité si la configuration PRACH du préambule d'accès aléatoire reçu est déterminée comme étant une première configuration PRACH ; et

déterminer que l'UE (102) présente une deuxième priorité et/ou que le service présente la deuxième priorité si la configuration PRACH du préambule d'accès aléatoire reçu est déterminée comme étant une deuxième configuration PRACH,

dans lequel les première et deuxième configurations PRACH sont différentes,

dans lequel la première configuration PRACH comprend une première liste d'occasions PRACH, la deuxième configuration PRACH comprend une deuxième liste d'occasions PRACH, et les première et deuxième listes sont différentes,

dans lequel la première liste d'occasions PRACH est associée à une première liste de ressources de signaux de synchronisation/bloc de canal de diffusion physique, SSB, la deuxième liste d'occasions PRACH est associée à une deuxième liste de ressources SSB, et les première et deuxième listes de ressources SSB sont différentes, dans lequel la détermination de la configuration PRACH du préambule d'accès aléatoire reçu comprend la détermination si le préambule d'accès aléatoire reçu a été transmis avec une ou plusieurs ressources SSB dans la première liste de ressources SSB ou une ou plusieurs ressources SSB dans la deuxième liste de ressources SSB.

FIG. 1

EP 4 144 139 B1

EP 4 144 139 B1

102

104

| msgA: Preamble |
| msgA: PUSCH |

| msgB |

FIG. 2

FIG. 3A

FIG. 3B

EP 4 144 139 B1

FIG. 4

FIG. 5

FIG. 6

EP 4 144 139 B1

**Example:**
- PRACH formal A3 (2 TD occs/slot)
- PRACH config. Period = 20 ms
- 2 PRACH slots per config. Period
- PRACH FDMed = 2
- #SSBs = 8

- #SSB-per PRACH-Occasion =2
- totalNumberOfRApreambles =64

# FIG. 7

**Example**:
- *#SSB-perPRACH-Occasion* =2
- *totalNumberOfRA-preambles* = 64
- *#CB-preambles-per-SSB* = 8

The 64 preambles configured for the cell (per PRACH occasion)

Preamble 0            8                                 32      40                              63
index

Map to SSB 0                                      SSB 1

▨ = Preamble indices for CBRA
☐ = Preamble indices for CFRA

# FIG. 8

EP 4 144 139 B1

**<u>Example</u>:**
- *#SSB-perPRACH-Occasion* =2
- *totalNumberOfRA-preambles* = 64
- *#CB-preambles-per-SSB* = 8
- *numberofRA-PreamblesGroupA* = 6

The 64 preambles configured for the cell (per PRACH occasion)

Preamble index: 0 ... 8 ... 32 ... 40 ... 63

Map to SSB 0 | SSB 1

■ = Preamble indices for CBRA, group A
▥ = Preamble indices for CBRA, group B
□ = Preamble indices for CFRA

## FIG. 9

**Example:**
— #SSBs-per-PRACH-occasion = 4
— #CB-preambles-per-SSB = 4
— #msgA-CB-PreamblesPerSSB = 2

The 64 preambles configured for the cell (per PRACH occasion)

Map to SSB 0     SSB 1     SSB 2     SSB 3

■ = Preamble indices for CBRA 4-step RACH
□ = Preamble indices for CFRA 4-step RACH
▥ = Preamble indices for CBRA 2-step RACH

FIG. 10

```
CFRA ::=                        SEQUENCE {
    occasions                         SEQUENCE {
        rach-ConfigGeneric                RACH-ConfigGeneric,
        ssb-perRACH-Occasion              ENUMERATED {oneEighth, oneFourth,
oneHalf, one, two, four, eight, sixteen}

OPTIONAL  -- Cond SSB-CFRA
    }
OPTIONAL, -- Need S

    occasionsHighPrio                 SEQUENCE {
        rach-ConfigGeneric                RACH-ConfigGeneric,
        ssb-perRACH-Occasion              ENUMERATED {oneEighth, oneFourth,
oneHalf, one, two, four, eight, sixteen}

OPTIONAL  -- Cond SSB-CFRA
    }
OPTIONAL, -- Need S

    resources                         CHOICE {
        ssb                               SEQUENCE {
            ssb-ResourceList                  SEQUENCE (SIZE(1..maxRA-SSB-
Resources)) OF CFRA-SSB-Resource,
            ra-ssb-OccasionMaskIndex          INTEGER (0..15)
        },
        csirs                             SEQUENCE {
            csirs-ResourceList                SEQUENCE (SIZE(1..maxRA-CSIRS-
Resources)) OF CFRA-CSIRS-Resource,
            rsrp-ThresholdCSI-RS              RSRP-Range
        }
    },
    ...,
    [[
    totalNumberOfRA-Preambles INTEGER (1..63)
OPTIONAL -- Cond Occasions
    ]]
}

CFRA-SSB-Resource ::=           SEQUENCE {
    ssb                               SSB-Index,
    ra-PreambleIndex                  INTEGER (0..63),
    ...
}

CFRA-CSIRS-Resource ::=         SEQUENCE {
    csi-RS                            CSI-RS-Index,
    ra-OccasionList                   SEQUENCE (SIZE(1..maxRA-
OccasionsPerCSIRS)) OF INTEGER (0..maxRA-Occasions-1),
    ra-OccasionListHighPrio           SEQUENCE (SIZE(1..maxRA-
OccasionsPerCSIRS)) OF INTEGER (0..maxRA-Occasions-1),
    ra-PreambleIndex                  INTEGER (0..63),
    ...
}
```

# FIG. 11A

40

```
CFRA-TwoStep-r16 ::=                        SEQUENCE {
    occasionsTwoStepRA-r16                      SEQUENCE {
        rach-ConfigGenericTwoStepRA-r16         RACH-ConfigGeneric,
        ssb-PerRACH-OccasionTwoStepRA-r16       ENUMERATED {oneEighth,
oneFourth, oneHalf, one,
                                                            two, four,
eight, sixteen}                     OPTIONAL   -- Cond SSB-CFRA
    }
OPTIONAL, -- Need S
    occasionsTwoStepRA-r16-HighPrio             SEQUENCE {
        rach-ConfigGenericTwoStepRA-r16         RACH-ConfigGeneric,
        ssb-PerRACH-OccasionTwoStepRA-r16       ENUMERATED {oneEighth,
oneFourth, oneHalf, one, two, four, eight, sixteen}

OPTIONAL   -- Cond SSB-CFRA
    }
OPTIONAL, -- Need S
    msgA-CFRA-PUSCH-r16                         MsgA-PUSCH-Config-r16,
    resourcesTwoStep-r16                        CHOICE {
        ssb                                         SEQUENCE {
            ssb-ResourceList                            SEQUENCE
(SIZE(1..maxRA-SSB-Resources)) OF CFRA-SSB-Resource,
            ra-ssb-OccasionMaskIndex                INTEGER (0..15)
        },
        csirs                                       SEQUENCE {
            csirs-ResourceList                          SEQUENCE
(SIZE(1..maxRA-CSIRS-Resources)) OF CFRA-CSIRS-Resource,
            rsrp-ThresholdCSI-RS                    RSRP-Range
        }
    },
    totalNumberOfTwoStepRA-Preambles-r16    INTEGER (1..62),
    ...
}

CFRA-SSB-Resource ::=           SEQUENCE {
    ssb                             SSB-Index,
    ra-PreambleIndex                INTEGER (0..63),
    ...
}

CFRA-CSIRS-Resource ::=         SEQUENCE {
    csi-RS                          CSI-RS-Index,
    ra-OccasionList                 SEQUENCE (SIZE(1..maxRA-
OccasionsPerCSIRS)) OF INTEGER (0..maxRA-Occasions-1),
    ra-OccasionListHighPrio                     SEQUENCE (SIZE(1..maxRA-
OccasionsPerCSIRS)) OF INTEGER (0..maxRA-Occasions-1),
    ra-PreambleIndex                INTEGER (0..63),
    ...
}

-- TAG-RACH-CONFIGDEDICATED-STOP
-- ASN1STOP
```

# FIG. 11B

```
CFRA-TwoStep-r16 ::=                          SEQUENCE {
    occasionsTwoStepRA-r16                        SEQUENCE {
        rach-ConfigGenericTwoStepRA-r16              RACH-ConfigGeneric,
        ssb-PerRACH-OccasionTwoStepRA-r16            ENUMERATED {oneEighth,
oneFourth, oneHalf, one,

                                                                  two, four,
eight, sixteen}                             OPTIONAL  -- Cond SSB-CFRA
    }
OPTIONAL, -- Need S
    msgA-CFRA-PUSCH-r16                          MsgA-PUSCH-Config-r16,
    msgA-CFRA-PUSCH-r16-HighPrio                 MsgA-PUSCH-Config-r16,
    resourcesTwoStep-r16                        CHOICE {
        ssb                                         SEQUENCE {
            ssb-ResourceList                            SEQUENCE (SIZE(1..maxRA-
SSB-Resources)) OF CFRA-SSB-Resource,
            ra-ssb-OccasionMaskIndex                    INTEGER (0..15)
        },
        csirs                                       SEQUENCE {
            csirs-ResourceList                          SEQUENCE (SIZE(1..maxRA-
CSIRS-Resources)) OF CFRA-CSIRS-Resource,
            rsrp-ThresholdCSI-RS                        RSRP-Range
        }
    },
    totalNumberOfTwoStepRA-Preambles-r16    INTEGER (1..62),
    ...
}

CFRA-SSB-Resource ::=          SEQUENCE {
    ssb                            SSB-Index,
    ra-PreambleIndex               INTEGER (0..63),
    ...
}

CFRA-CSIRS-Resource ::=        SEQUENCE {
    csi-RS                         CSI-RS-Index,
    ra-OccasionList                SEQUENCE (SIZE(1..maxRA-
OccasionsPerCSIRS)) OF INTEGER (0..maxRA-Occasions-1),
    ra-PreambleIndex               INTEGER (0..63),
    ...
}

-- TAG-RACH-CONFIGDEDICATED-STOP
-- ASN1STOP
```

# FIG. 12

```
CFRA ::=                         SEQUENCE {
    occasions                        SEQUENCE {
        rach-ConfigGeneric               RACH-ConfigGeneric,
        ssb-perRACH-Occasion             ENUMERATED {oneEighth, oneFourth,
oneHalf, one, two, four, eight, sixteen}

OPTIONAL  -- Cond SSB-CFRA
    }
OPTIONAL, -- Need S
    resources                        CHOICE {
        ssb                              SEQUENCE {
            ssb-ResourceList                 SEQUENCE (SIZE(1..maxRA-SSB-
Resources)) OF CFRA-SSB-Resource,
            ssb-ResourceListHighPrio    SEQUENCE (SIZE(1..maxRA-SSB-
Resources)) OF CFRA-SSB-Resource,

            ra-ssb-OccasionMaskIndex         INTEGER (0..15)
        },
        csirs                            SEQUENCE {
            csirs-ResourceList               SEQUENCE (SIZE(1..maxRA-CSIRS-
Resources)) OF CFRA-CSIRS-Resource,
            csirs-ResourceListHighPrio               SEQUENCE (SIZE(1..maxRA-
CSIRS-Resources)) OF CFRA-CSIRS-Resource,

            rsrp-ThresholdCSI-RS             RSRP-Range
        }
    },
    ...,
    [[
    totalNumberOfRA-Preambles INTEGER (1..63)
OPTIONAL -- Cond Occasions
    ]]
}

CFRA-SSB-Resource ::=        SEQUENCE {
    ssb                          SSB-Index,
    ra-PreambleIndex             INTEGER (0..63),
    ...
}

CFRA-CSIRS-Resource ::=      SEQUENCE {
    csi-RS                       CSI-RS-Index,
    ra-OccasionList              SEQUENCE (SIZE(1..maxRA-
OccasionsPerCSIRS)) OF INTEGER (0..maxRA-Occasions-1),
    ra-PreambleIndex             INTEGER (0..63),
    ...
}
```

# FIG. 13

```
CFRA ::=                       SEQUENCE {
    occasions                        SEQUENCE {
        rach-ConfigGeneric               RACH-ConfigGeneric,
        ssb-perRACH-Occasion             ENUMERATED {oneEighth, oneFourth,
oneHalf, one, two, four, eight, sixteen}

OPTIONAL   -- Cond SSB-CFRA
    }
OPTIONAL, -- Need S
    resources                        CHOICE {
        ssb                              SEQUENCE {
            ssb-ResourceList                 SEQUENCE (SIZE(1..maxRA-SSB-
Resources)) OF CFRA-SSB-Resource,
            ra-ssb-OccasionMaskIndex         INTEGER (0..15)
        },
        csirs                            SEQUENCE {
            csirs-ResourceList               SEQUENCE (SIZE(1..maxRA-CSIRS-
Resources)) OF CFRA-CSIRS-Resource,
            rsrp-ThresholdCSI-RS             RSRP-Range
        }
    },
    ...,
    [[
    totalNumberOfRA-Preambles INTEGER (1..63)
OPTIONAL -- Cond Occasions
    ]]
}

CFRA-SSB-Resource ::=          SEQUENCE {
    ssb                            SSB-Index,
    ra-PreambleIndex               INTEGER (0..63),
    ra-PreambleIndexHighPrio       INTEGER (0..63),
    ...
}

CFRA-CSIRS-Resource ::=        SEQUENCE {
    csi-RS                         CSI-RS-Index,
    ra-OccasionList                SEQUENCE (SIZE(1..maxRA-
OccasionsPerCSIRS)) OF INTEGER (0..maxRA-Occasions-1),
    ra-PreambleIndex               INTEGER (0..63),
    ra-PreambleIndexHighPrio       INTEGER (0..63),
    ...
}
```

# FIG. 14

1500

s1502

```
┌─────────────────────────────────────────────────┐
│        receiving first PRACH configuration       │
└─────────────────────────────────────────────────┘
```

s1504

```
┌─────────────────────────────────────────────────┐
│       receiving second PRACH configuration       │
└─────────────────────────────────────────────────┘
```

s1506

```
┌─────────────────────────────────────────────────┐
│ selecting a PRACH configuration from a group including at least a │
│ first PRACH configuration associated with a first group and a     │
│ second PRACH configuration associated with a second group,        │
│ wherein the first and second PRACH configurations are different    │
└─────────────────────────────────────────────────┘
```

s1508

```
┌─────────────────────────────────────────────────┐
│ transmitting a random access preamble in accordance │
│ with the selected PRACH configuration as part of a  │
│ contention free random access procedure             │
└─────────────────────────────────────────────────┘
```

s1510

```
┌─────────────────────────────┐
│        receiving RAR          │
└─────────────────────────────┘
```

s1512

```
┌─────────────────────────────────────────────────┐
│ in response to receiving and successfully decoding the RAR, │
│        transmitting a request message in PUSCH              │
└─────────────────────────────────────────────────┘
```

# FIG. 15

FIG. 16

FIG. 17

1800

s1802

```
┌ ─ ─ ─ ─ ─ ─ ─ ─ ─ ─ ─ ─ ─ ─ ─ ─ ─ ─ ─ ─ ┐
│   transmitting first PRACH configuration   │
└ ─ ─ ─ ─ ─ ─ ─ ─ ─ ─ ─ ─ ─ ─ ─ ─ ─ ─ ─ ─ ┘
```

s1804

```
┌ ─ ─ ─ ─ ─ ─ ─ ─ ─ ─ ─ ─ ─ ─ ─ ─ ─ ─ ─ ─ ┐
│ transmitting second PRACH configuration    │
└ ─ ─ ─ ─ ─ ─ ─ ─ ─ ─ ─ ─ ─ ─ ─ ─ ─ ─ ─ ─ ┘
```

s1806

receiving a random access preamble transmitted by a UE as part of a contention free random access procedure

s1808

determining a PRACH configuration that was used by the UE to transmit the random access preamble

s1810

determining that the UE has a first priority, the UE has a first UE type, a service has the first priority, the service has a first service type, and/or a first network slice if the PRACH configuration of the received random access preamble is determined to be a first PRACH configuration

determining that the UE has a second priority, the UE has a second UE type, the service has the second priority, the service has a second service type, and/or a second network slice if the PRACH configuration of the received random access preamble is determined to be a second PRACH configuration

s1814

s1812

```
┌ ─ ─ ─ ─ ─ ─ ─ ─ ─ ─ ─ ┐
│   transmitting RAR      │
└ ─ ─ ─ ─ ─ ─ ─ ─ ─ ─ ─ ┘
```

s1816

```
┌ ─ ─ ─ ─ ─ ─ ─ ─ ─ ─ ─ ─ ─ ─ ─ ─ ─ ─ ─ ─ ─ ─ ─ ─ ┐
│        receiving a request message in PUSCH         │
└ ─ ─ ─ ─ ─ ─ ─ ─ ─ ─ ─ ─ ─ ─ ─ ─ ─ ─ ─ ─ ─ ─ ─ ─ ┘
```

FIG. 18

FIG. 19

104

2002

2004

2006

2008

FIG. 20

**REFERENCES CITED IN THE DESCRIPTION**

**Patent documents cited in the description**

- US 2013242730 A1
- US 2020037297 A1

- JP 2019121953 A